(19) Europäisches Patentamt / European Patent Office / Office européen des brevets

(11) **EP 3 995 949 A1**

(12) **DEMANDE DE BREVET EUROPEEN**

(43) Date de publication:
**11.05.2022 Bulletin 2022/19**

(21) Numéro de dépôt: **21204607.2**

(22) Date de dépôt: **26.10.2021**

(51) Classification Internationale des Brevets (IPC):
**G06F 8/41** *(2018.01)* **G06F 12/08** *(2016.01)*

(52) Classification Coopérative des Brevets (CPC):
**G06F 8/4442; G06F 8/4441; G06F 12/08**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.11.2020 FR 2011394**

(71) Demandeur: **Commissariat à l'énergie atomique et aux énergies alternatives 75015 Paris (FR)**

(72) Inventeurs:
• **SID LAKHDAR, Riyane**
  **38054 GRENOBLE CEDEX 09 (FR)**
• **CHARLES, Henri-Pierre**
  **38054 GRENOBLE CEDEX 09 (FR)**
• **KOOLI, Maha**
  **38054 GRENOBLE CEDEX 09 (FR)**

(74) Mandataire: **INNOV-GROUP**
  **310, avenue Berthelot**
  **69372 Lyon Cedex 08 (FR)**

(54) **PROCÉDÉ D'EXÉCUTION D'UN PROGRAMME D'ORDINATEUR PAR UN CALCULATEUR ÉLECTRONIQUE COMPORTANT UNE MÉMOIRE PRINCIPALE ET UNE MÉMOIRE SECONDAIRE**

(57) Lors de l'exécution du programme d'ordinateur :
- un calculateur divise (172) une zone d'une mémoire principale dans laquelle est enregistrée une structure de données en NbS1 subdivisions, puis
- le calculateur calcule (174) un poids $w_{S,NbS1}(k)$ pour chacune des NbS1 subdivisions à l'aide de la relation suivante : $w_{S,NbS1}(k) = P_S(1+(k-1) \times (NbSO-l)/(NbSl-l))$, où :
- k est le numéro d'ordre k d'une des NbS1 subdivisions, et
- $P_S()$ est une fonction prédéterminée continue sur un intervalle [1; NbS0] et définie sur chaque intervalle [$k_0$, $k_0+1$] par un polynôme d'ordre inférieur à quatre, où $k_0$ est un numéro d'ordre entier compris dans l'intervalle [1; NbS0], puis

- lorsqu'une donnée $D_{k,n}$ contenue dans une subdivision k de la mémoire principale doit être transférée vers une mémoire secondaire, le calculateur transfert un bloc de $w_{S,NbS1}(k)$ données contenant la donnée $D_{k,n}$, où $w_{S,NbS1}(k)$ est le poids calculé pour cette subdivision k.

Fig. 9

**Description**

L'invention concerne un procédé d'exécution d'un programme d'ordinateur par un calculateur électronique comportant une mémoire principale et une mémoire secondaire. L'invention concerne également :

- un procédé de compilation d'un code source d'un programme d'ordinateur pour un calculateur comportant une mémoire principale et une mémoire secondaire,
- un support d'enregistrement d'informations pour la mise en œuvre de ces procédés, et
- un compilateur.

Le programme d'ordinateur concerné est typiquement un programme d'ordinateur au "niveau utilisateur". En informatique, le "niveau utilisateur" est plus connu sous le terme anglais de "user level". Le niveau utilisateur est différent du "niveau système". Le niveau système est plus connu sous les termes anglais de "system level" ou "Kernel level".

Ici, les procédés de compilation concernés sont notamment les procédés de compilation qui comportent une étape de transformation d'un code source initial en un code source optimisé qui est ensuite compilé pour obtenir le code exécutable du programme d'ordinateur.

Par la suite, dans ce texte, le terme « programme d'ordinateur » est utilisé comme un terme générique et peut donc désigner aussi bien le code source de ce programme d'ordinateur que le code exécutable de ce programme d'ordinateur.

L'expression "accéder à une donnée" désigne le fait de lire et/ou d'écrire une donnée dans la mémoire. De telles lectures et/ou écritures d'une donnée peuvent, si nécessaire, provoquer un transfert de cette donnée entre deux mémoires différentes d'un calculateur.

Une mémoire secondaire est une mémoire physiquement distincte de la mémoire principale. De plus cette mémoire secondaire correspond, dans l'espace d'adressage du programme d'ordinateur, à une plage d'adresses distincte de la plage d'adresses correspondant à la mémoire principale. Ainsi, la mémoire secondaire est utilisée lors de l'exécution du programme d'ordinateur uniquement si le code exécutable de ce programme d'ordinateur comporte :

- des instructions qui gèrent le transfert de données entre la mémoire principale et la mémoire secondaire, et
- des instructions d'accès à la mémoire secondaire.

Les instructions d'accès à la mémoire secondaire comporte, en tant qu'opérande, une adresse virtuelle comprise dans la plage d'adresses de l'espace d'adressage du programme d'ordinateur qui correspond spécifiquement à la mémoire secondaire.

En cela, une mémoire secondaire est différentes des mémoires caches et autres mémoires similaires gérées automatiquement par le système d'exploitation et/ou un micro-calculateur spécifiquement dédié à cette fonction. En effet, pour bénéficier de la présence de telles mémoires caches, le programme d'ordinateur exécuté n'a pas besoin de comporter des instructions qui gèrent le transfert de données entre la mémoire principale et les mémoires caches et de comporter des instructions d'accès aux mémoires caches. De plus, contrairement à une mémoire secondaire, une mémoire cache ne correspond pas à une plage d'adresses, dans l'espace d'adressage du programme d'ordinateur, différente de la plage d'adresses de la mémoire principale.

Ainsi, pour utiliser une mémoire secondaire, le développeur doit introduire manuellement dans le code source du programme d'ordinateur :

- des instructions de transfert de données entre la mémoire principale et la mémoire secondaire, et
- des instructions d'accès à la mémoire secondaire.

Généralement, le transfert de données entre la mémoire principale et la mémoire secondaire se fait par bloc de données pour limiter le nombre de fois où le calculateur électronique doit exécuter ces instructions de transfert. La taille des blocs transférés est un paramètre important pour ajuster le nombre de transferts de données entre la mémoire principale et la mémoire secondaire. Ainsi, la taille des blocs de données est un paramètre qui permet d'atteindre un niveau, mesurable, de performance du calculateur électronique. Par exemple, la performance mesurée est la vitesse d'exécution du programme d'ordinateur ou la consommation d'énergie du calculateur électronique.

Il est possible de déterminer, par exemple par expérimentation, pour une structure S de données de taille Dim0, une taille $w_{S,Dim0}$ pour les blocs de données transférés qui correspond à un niveau de performance souhaité. Cette taille $w_{S,Dim0}$ dépend fortement de la taille de la structure de données et donc de sa taille Dim0. Autrement dit, une taille $w_{S,Dim0}$ qui permet d'atteindre le niveau de performance souhaité lorsque la structure de données est de taille Dim0 ne permet pas nécessairement de conserver le même niveau de performance lorsque la même structure S de données a une taille différente Dim1. En pratique, c'est même le cas le plus fréquent.

Dans certain programme d'ordinateur la taille de la structure de données est connue uniquement au moment de son exécution et non pas au moment de la compilation du programme d'ordinateur. Dans ce cas, il n'est en général pas possible de trouver une taille $w_{S,Dim0}$ qui conserve sensiblement le même niveau de performance pour un grand nombre de tailles différentes de la structure de données.

Les articles suivants traitent du transfert de données entre une mémoire principale et une mémoire secondaire connue sous l'acronyme SPM ("ScratchPad Memory") :

- Kandemir M et AL : "Dynamic management of scratch-pad memory space", Proceedings of the 38th, annual design automation conference, Las Vegas, June 18-22-2001; pages 690-695, et
- Doosan Cho et AL : "Adaptive Scratch Pad Memory Management for Dynamic Behavior of Multimedia Applications", IEEE Transactions on computer aided design of integrated circuit and systems, vol. 28, n°4, 1 avril 2009, pages 554-567.

L'article de Kandemir M et AL divulgue un compilateur qui permet d'introduire automatique des instructions de transfert de données entre la mémoire principale et la mémoire SPM. L'article de Doosan Cho et Al divulgue un module qui permet de déterminer, lors de l'exécution du programme d'ordinateur, quelles sont les données à transférer de la mémoire principale vers la mémoire SPM. Aucun de ces articles n'apporte une solution qui permette de conserver le niveau de performance du calculateur sensiblement constant et cela malgré un changement dans la taille des matrices traitées par le programme d'ordinateur exécuté.

L'article suivant décrit un méthode pour déterminer automatiquement, pour chaque structure de données traitées, un agencement optimisé des données de ces structures dans la mémoire principale : Riyane SID LAKHDAR et AL : "Data-layout optimization based on memory-access-pattern analysis for source-code performance improvement", Proceedings of the 23th International Workshop on Software and Compilers for Embedded Systems, 25 mai 2020, pages 1-6.

L'invention vise à proposer une solution qui permet de maintenir le niveau de performance du calculateur électronique sensiblement constant même lorsque la taille de la structure de données varie.

Elle a donc pour objet un procédé d'exécution d'un programme d'ordinateur conforme à la revendication 1.

L'invention a également pour objet un procédé de compilation d'un code source conforme à la revendication 4 .

L'invention a également pour objet un support d'enregistrement d'informations, lisible par un microprocesseur, ce support comportant des instructions pour l'exécution d'un des procédés ci-dessus, lorsque ces instructions sont exécutées par le microprocesseur.

Enfin, l'invention a également pour objet un compilateur conforme à la revendication 15.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'une unité de calcul incorporant un calculateur électronique ;
- la figure 2 est une illustration schématique de l'architecture d'un compilateur ;
- les figures 3 et 4 sont des illustrations schématiques de parcours possibles d'une matrice ;
- les figures 5 à 8 sont des illustrations de signatures modèles utilisées par le compilateur de la figure 2 ;
- la figure 9 est un procédé de compilation d'un code source à l'aide du compilateur de la figure 2 et d'exécution du code exécutable ainsi obtenu par l'unité de calcul de la figure 1 ;
- les figures 10 à 12 illustrent la comparaison de signatures construites à des signatures modèles lors de la mise en œuvre du procédé de la figure 9 ;
- la figure 13 est un graphe illustrant le fonctionnement d'une opération d'affectation de poids intermédiaires à des données mise en œuvre dans le procédé de la figure 9 ;
- la figure 14 est un graphe illustrant le fonctionnement d'une procédure de calcul de poids mise en œuvre dans le procédé de la figure 9.

Dans ces figures les mêmes références sont utilisées pour désigner les mêmes éléments. Dans la suite de cette description, les caractéristiques et fonctions bien connues de l'homme du métier ne sont pas décrites en détail.

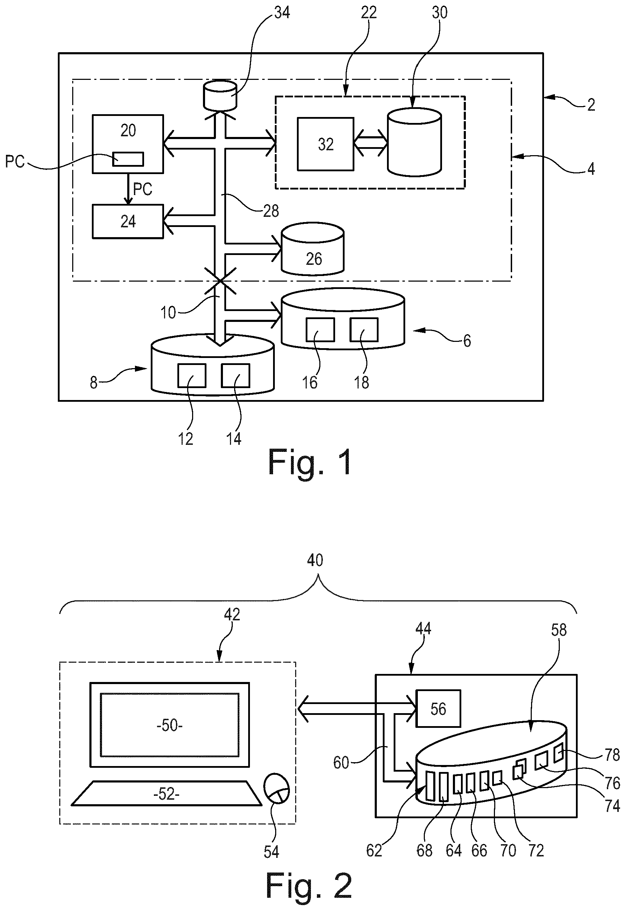

Dans cette description, un exemple détaillé de compilation et d'exécution d'un programme d'ordinateur optimisé pour un calculateur cible comportant une mémoire secondaire est d'abord décrit dans le chapitre I en référence aux figures 1 à 14. Ensuite, dans le chapitre II suivant, différentes variantes du mode de réalisation décrit dans le chapitre précédent sont décrites. Enfin, les avantages des différents modes de réalisation sont présentés dans un dernier chapitre III.

Chapitre I : Compilation et exécution optimisées d'un programme d'ordinateur pour un calculateur comportant une mémoire secondaire

Un exemple d'architecture matérielle possible pour un calculateur électronique incorporé dans une unité de calcul est d'abord décrit puis, le compilateur et le procédé de compilation et d'exécution du programme d'ordinateur sont décrits.

La figure 1 représente une unité électronique 2 de calcul. Par exemple, l'unité 2 est un ordinateur, un smartphone, une tablette électronique, un bloc de commande d'un moteur ou autre. La structure matérielle d'une telle unité 2 est bien connue et seuls les éléments nécessaires à la compréhension de l'invention sont représentés et décrits plus en détail. L'unité 2 comporte :

- un calculateur électronique programmable 4,
- une mémoire principale 6,
- une mémoire non volatile 8, et
- un bus 10 de transfert de données entre les mémoires 6, 8 et le calculateur 4.

Le calculateur 4 est apte à exécuter un code exécutable d'un programme d'ordinateur obtenu après compilation d'un code source de ce programme d'ordinateur. Ici, le programme d'ordinateur est un programme au niveau utilisateur ("user level" en anglais).

La mémoire 6 est typiquement une mémoire rapide à laquelle le calculateur 4 accède plus rapidement qu'à la mémoire 8. Ici, la mémoire 6 est une mémoire vive. Il peut s'agir d'une mémoire volatile telle qu'une DRAM (« Dynamic Random Access Memory »). La mémoire 6 peut aussi être une mémoire vive non volatile telle qu'une mémoire FLASH.

La mémoire 8 est par exemple un disque dur ou tout autre type de mémoire non volatile. La mémoire 8 comporte un code exécutable 12 d'un programme d'ordinateur. Le code 12 est apte à être exécuté par le calculateur 4. La mémoire 8 peut aussi comporter des données 14 à traiter par ce programme lorsque celui-ci est exécuté. Lors de l'exécution du code exécutable 12 par le calculateur 4, les instructions du code 12 ainsi que les données 14 sont transférées dans un premier temps dans la mémoire 6 pour y accéder plus rapidement. Dans la mémoire 6, les instructions du code exécutable 12 et les données 14 traitées par ce programme portent, respectivement, les références numériques 16 et 18.

Lorsqu'il est exécuté, le code exécutable 12 traite des données structurées. Une donnée structurée est une structure de données. Une structure de données est une structure qui regroupe plusieurs données à l'intérieur d'une plage continue d'adresses virtuelles dans l'espace d'adressage du programme d'ordinateur exécuté. L'espace d'adressage du programme d'ordinateur est constitué par l'ensemble des adresses qui peuvent être utilisées en tant qu'opérande d'une instruction d'accès à la mémoire dans le programme d'ordinateur. Une instruction d'accès est typiquement une instruction d'écriture ou de lecture d'une donnée dans la mémoire exécutable par le calculateur 4.

A l'intérieur de la plage continue d'adresses d'une structure de données, les données sont placées les unes par rapport aux autres selon un agencement prédéterminé. Dans ces conditions, la position d'une donnée à l'intérieur d'une structure de données est repérée par un ou plusieurs indices. Ainsi, à partir de la connaissance d'une adresse de base de la structure de données et des valeurs des indices qui repèrent la position d'une donnée à l'intérieur de cette structure de données, il est possible de construire l'adresse virtuelle de cette donnée dans l'espace d'adressage du programme d'ordinateur. An utilisant cette adresse virtuelle, chaque donnée de la structure de données peut directement être accédée individuellement. Ainsi, cette donnée peut être lue ou écrite indépendamment des autres données de la structure de données. L'adresse de base d'une structure de données est par exemple l'adresse virtuelle à laquelle débute ou se termine cette structure de données.

Il existe un grand nombre de structures de données possibles comme une matrice à une ou plusieurs tailles ou un objet en programmation objet ou autres. Étant donné que l'une des structures de données les plus fréquemment utilisée est une matrice à deux dimensions, les principaux exemples détaillés de réalisation sont donnés dans le cas particulier où la structure de données est une matrice à deux dimensions. Toutefois, l'enseignement donné dans ce cas particulier se transpose sans difficulté aux autres structures de données.

Dans le cas d'une matrice, la position de chaque donnée à l'intérieur de la matrice est repérée à l'aide d'indices. Classiquement, dans le cas d'une matrice à deux dimensions, ces indices sont appelés "numéro de ligne" et "numéro de colonne". Le traitement de telles structures de données par le code exécutable 12 implique de nombreux accès aux données de cette structure de données.

Le calculateur 4 comporte :

- un microprocesseur 20 également connu sous l'acronyme CPU (« Central Processing Unit »),
- une mémoire cache 22,
- un module 24 de préchargement également connu sous le terme anglais de « prefetcher »,
- une mémoire tampon 26,

- une mémoire secondaire 34, et
- un bus 28 de transfert de données entre le microprocesseur 20, la mémoire 22, le module 24, la mémoire tampon 26, la mémoire 34 et le bus 10.

Le microprocesseur 20 est apte à exécuter le code exécutable 12. A cet effet, il comporte en outre un registre PC appelé Compteur Ordinal (« Program Counter » en anglais) ou pointeur d'instructions (« Instruction Pointer » en anglais) qui contient l'adresse de l'instruction actuellement exécutée ou de l'instruction suivante à exécuter par le microprocesseur 20.

La mémoire cache 22 est ici une mémoire cache à un ou plusieurs niveaux. Dans cet exemple, la mémoire cache 22 est une mémoire cache à trois niveaux. Dans ce cas, les trois niveaux sont connus sous les termes, respectivement, de niveau L1, niveau L2 et niveau L3. La mémoire cache 22 permet de stocker des données auxquelles le microprocesseur 20 peut accéder plus rapidement que si elles avaient été seulement stockées dans la mémoire 6.

Pour le niveau L1, la mémoire 22 comporte une mémoire 30 et un micro-calculateur 32. La mémoire 30 contient les données auxquelles le microprocesseur 20 peut accéder plus rapidement sans avoir à les lire dans la mémoire 6. Le micro-calculateur 32 gère l'enregistrement et l'effacement de données dans la mémoire 30. En particulier, quand une nouvelle donnée doit être enregistrée dans la mémoire 30, le micro-calculateur 32 détermine, selon un algorithme qui lui est propre, la ou les données à effacer dans la mémoire 30 pour libérer la place nécessaire à l'enregistrement de cette nouvelle donnée dans la mémoire cache 22.

L'architecture des autres niveaux L2 et L3 est similaire et n'a pas été représenté sur la figure 1.

Le module 24 a pour fonction de prédire, avant que le microprocesseur 20 n'en ait besoin, là où les données à précharger dans la mémoire cache 22 puis de déclencher le préchargement de ces données. A cet effet, le module 24 peut comporter un micro-calculateur dédié à cette fonction. Dans ce cas, il comporte sa propre mémoire contenant les instructions nécessaires pour exécuter un procédé de préchargement et son propre microprocesseur qui exécute ces instructions. Il peut aussi s'agir d'un circuit intégré dédié. Dans ce cas, les instructions du procédé de préchargement sont câblées en dur dans ce circuit intégré.

La mémoire 26 est ici une mémoire tampon utilisée par le module 24 pour y enregistrer temporairement la ou les données à précharger avant qu'elles soient transférées, si nécessaire, dans la mémoire cache 22.

Dans le cas du calculateur 4, transférer un mot complet ou une ligne complète de la mémoire 6 dans la mémoire tampon 26 ne prend pas plus de temps que transférer seulement la donnée à précharger. De plus, transférer un mot complet ou une ligne complète permet aussi de limiter l'apparition des défauts de cache. Ainsi, dans le cas du calculateur 4, il est préférable que les données d'une structure de données chargées dans la mémoire 22 soient accédées dans le même ordre que l'ordre dans lequel elles sont enregistrées dans la mémoire cache 22. En effet, cela limite les défauts de cache et cela accélère donc substantiellement l'exécution du code exécutable 12.

À ce stade, il est souligné que l'agencement de la structure de données qui permet d'accélérer l'exécution du code exécutable dépend notamment du programme d'ordinateur exécuté et de l'architecture matérielle du calculateur 4.

Dans ce texte par « agencement d'une structure de données », on désigne l'agencement des données de cette structure de données dans la mémoire principale. En particulier, cela désigne donc :

- l'agencement des différentes données de la structure de données les unes par rapport aux autres, et
- l'emplacement où est enregistré la structure de données dans la ou les mémoires du calculateur cible.

Le programme d'ordinateur détermine dans quel ordre temporel les données de la structure de données sont accédées. Ainsi, un agencement d'une structure de données optimisé pour un programme d'ordinateur particulier n'est pas forcément optimal pour un autre programme d'ordinateur. Par exemple, un agencement en mémoire d'une matrice optimisée pour un premier programme d'ordinateur qui accède à cette matrice ligne par ligne n'est pas optimisé pour un second programme d'ordinateur qui accède à cette même matrice colonne par colonne. Ici par « agencement optimisé », on désigne un agencement des données de la structure de données dans la mémoire qui améliore une performance prédéfinie du calculateur cible. Cette performance prédéfinie est une grandeur physique mesurable à l'aide d'un capteur électronique. Dans ce mode de réalisation, la performance prédéfinie est la vitesse d'exécution du programme d'ordinateur. La vitesse d'exécution est mesurée en comptant le nombre de cycle d'horloge du microprocesseur entre l'instant où débute l'exécution du programme et l'instant où cette exécution se termine.

Ici, la mémoire 34 est appelée "secondaire" car l'accès à cette mémoire 34 est directement et uniquement géré par le programme d'ordinateur exécuté. Pour cela, la mémoire 34 correspond à une plage spécifique d'adresses dans l'espace d'adressage du programme d'ordinateur. Ainsi, lorsque le calculateur exécute une instruction d'accès à une donnée dont l'adresse est située dans cette plage spécifique, cela provoque une écriture ou une lecture directement dans la mémoire 34. De même, le transfert de données entre la mémoire principale 6 et la mémoire secondaire 34 est provoqué par l'exécution d'instructions d'accès situées dans le code exécutable du programme d'ordinateur. Autrement dit, en absence d'instruction d'accès à la mémoire 34 dans le code du programme exécuté, aucune donnée traitée par ce programme d'ordinateur n'est écrite ou lue dans la mémoire 34. Ainsi, actuellement, c'est au développeur, qui écrit le programme d'ordinateur, d'introduire lui-même dans le code source du programme d'ordinateur, les instructions d'accès à la mémoire 34 de manière à accélérer l'exécution de ce programme d'ordinateur par le calculateur 4. Ceci est souvent une tâche difficile à réaliser.

Sur ce point, la mémoire 34 se distingue des mémoires caches et autres mémoires tampons utilisés pour accélérer l'accès aux données de la mémoire principale 6. En effet, comme précédemment expliqué, l'écriture et la lecture de données dans la mémoire cache 22 ou dans la mémoire tampon 26 ne sont pas explicitement gérés par le programme d'ordinateur. Il n'existe aucune adresse dans l'espace d'adressage du programme d'ordinateur qui correspond spécifiquement à l'une de ces mémoires 22 et 26. Dès lors, le programme d'ordinateur ne connaît pas l'existence de la mémoire cache 22 et de la mémoire tampon 26 et il ne gère pas lui-même l'écriture et la lecture de données dans ces mémoires 22 et 26.

A l'inverse, la mémoire principale 6 correspond elle aussi à un plage d'adresses dans l'espace d'adressage du programme d'ordinateur. Dès lors, comme pour la mémoire secondaire, le code du programme d'ordinateur peut comporter des instructions d'accès paramétrées avec une adresse virtuelle située dans cette plage qui correspond à la mémoire principale 6. Lorsque le microprocesseur 20 exécute une telle instruction d'accès à la mémoire 6, cela provoque un accès :

- à la mémoire principale 6 si la donnée n'est pas déjà dans la mémoire cache 22 ou la mémoire tampon 26, ou
- à la mémoire cache 22 si la donnée se trouve déjà dans la mémoire cache 22, ou
- à la mémoire tampon 26 si la donnée se trouve déjà dans la mémoire tampon 26.

Ici, c'est le micro-calculateur 32, le module 24 et le système d'exploitation qui déterminent si la donnée correspondant à cette adresse doit être accédée dans la mémoire 22 ou dans la mémoire 26 ou dans la mémoire principale 6. C'est donc d'autres éléments, extérieurs au programme d'ordinateur exécuté, qui gère les accès à ces mémoires 22 et 26. Ainsi, contrairement à la mémoire 34, les mémoires 22 et 26 ne correspondent pas, à l'intérieure de l'espace d'adressage du programme d'ordinateur, à des plages d'adresses distinctes de la plage d'adresses correspondant à la mémoire 6.

Ici, la mémoire 34 est mécaniquement distincte de la mémoire principale 6, de la mémoire cache 22 et de la mémoire tampon 26. La mémoire 34 présente des caractéristiques et des avantages que ne présentent pas la mémoire principale 6. Ici, à titre d'exemple, elle est plus rapide que n'importe lesquelles des mémoires 6, 22 et 26. Par "mémoire plus rapide", on désigne le fait que le temps pour lire ou écrire une donnée dans cette mémoire est plus court que le temps nécessaire pour lire ou écrire une donnée dans la mémoire cache 22. Par exemple, la mémoire 34 est une mémoire connue sous l'acronyme SPM ("ScratchPad Memory").

Sous la commande du microprocesseur 20, le bus 28 permet de transférer directement des données de la mémoire 6 dans la mémoire 34 et vice-versa. Par exemple, dans ce mode de réalisation, la largeur du bus 28 est suffisante pour permettre de transférer simultanément quatre données de la mémoire 6 à la mémoire 34 et vice-versa. A titre d'exemple, dans cette description, le bus 28 est un bus de 128 bits.

La figure 2 représente un compilateur 40 apte à générer un code exécutable d'un programme d'ordinateur optimisé pour le calculateur 4. Pour cela, le compilateur 40 introduit automatiquement des instructions d'accès à la mémoire 34 afin de générer un code exécutable qui, lorsqu'il est exécuté par le calculateur 4, exploite la mémoire 34 pour accélérer son exécution. Ainsi, le compilateur 40 améliore les performances du calculateur 4 en exploitant la mémoire 34. Par contre, le compilateur 40 ne modifie en rien l'algorithme développé par le développeur qui a écrit le code source. En particulier, le compilateur 40 ne modifie pas l'ordre dans lequel les instructions d'accès aux donnés sont exécutées.

À cet effet, le compilateur 40 comporte :

- une interface Homme-Machine 42, et
- une unité centrale 44.

L'interface Homme-Machine 42 comporte, par exemple, un écran 50, un clavier 52 et une souris 54 raccordés à l'unité centrale 44.

L'unité centrale 44 comporte un microprocesseur 56 et une mémoire 58, ainsi qu'un bus 60 d'échanges d'informations raccordant les différents éléments du compilateur 40 entre eux.

Le microprocesseur 56 est apte à exécuter les instructions enregistrées dans la mémoire 58. La mémoire 58 comporte :

- un code source 62 initial du programme d'ordinateur à compiler,
- les instructions d'un module 64 de compilation non-optimisée,

- les instructions d'un module 66 de compilation optimisée,
- les instructions d'un module 68 de relevés de motifs d'accès,
- les instructions d'un module 70 de construction de signatures caractéristiques d'accès à la mémoire,
- les instructions d'un module 72 de construction d'une fonction numérique $P_s(x)$ de calcul de poids, et
- une base 74 de données de codages optimisés de structures de données.

Le code source 62 est un code source qui, après compilation, correspond à un code exécutable qui traite et manipule des structures de données lorsqu'il est exécuté par le calculateur 4. À cet effet, le code source 62 contient notamment :

- des déclarations d'une ou plusieurs structures de données dont les tailles sont acquises au cours de l'exécution du programme d'ordinateur,
- des instructions d'accès aux données des structures de données déclarées, et
- des instructions de manipulation des données accédées.

Les instructions de manipulation des données sont, par exemple, choisies dans le groupe constitué :

- des instructions booléennes, comme les opérations OR, XOR, AND, NAND, et
- des instructions arithmétiques comme une addition, une soustraction, une division ou une multiplication.

Par contre, le code source 62 ne comporte pas d'instructions d'accès à la mémoire 34 mais seulement des instructions d'accès à la mémoire principale 6.

Par la suite, la description du compilateur 40 est illustrée dans le cas particulier où le code source 62 réalise la multiplication de deux matrices « a » et « b » et enregistre le résultat de cette multiplication dans une matrice « res ». Un exemple d'un tel code source est donné dans l'annexe 1 à la fin de la description. Dans ces annexes, les numéros à gauche et en petits caractères sont des numéros de lignes.

Ici, le code source 62 est écrit dans un langage de programmation appelé par la suite « langage V0 ». Le langage V0 est identique au langage C++ sauf qu'il a été doté en plus des instructions « MATRIX_DEFINE », « MATRIX_ALLOCATE », « MATRIX_FREE ».

L'instruction « MATRIX_DEFINE » déclare une structure de données et, plus précisément, une matrices à deux dimensions. L'instruction « MATRIX_ALLOCATE » alloue dynamiquement, généralement dans le tas (« HEAP » en anglais), l'espace mémoire pour y enregistrer la matrice déclarée à l'aide de l'instruction « MATRIX_DEFINE » et retourne un pointeur qui pointe vers le début de cette matrice. Le tas se trouve dans la mémoire 6. L'instruction « MATRIX_FREE » libère l'espace mémoire précédemment alloué par l'instruction « MATRIX_ALLOCATE ». Ces instructions « MATRIX_DEFINE », « MATRIX_ALLOCATE », « MATRIX_FREE » remplissent également des fonctions supplémentaires décrites plus en détail ci-dessous.

Ainsi, dans le listing de l'annexe 1, l'instruction « MATRIX_DEFINE (TYPE a) » déclare une matrice « a », dans laquelle chaque cellule contient une donnée ayant le type « TYPE ». Dans le code source 62, le type « TYPE » est égale au type « int » du langage C++. Ainsi, chaque cellule de la matrice « a » contient un entier.

L'instruction « MATRIX_ALLOCATE(TYPE, N0, N1, a) alloue un espace mémoire suffisamment grand pour y enregistrer la matrice "a " de N0 colonnes et N1 lignes et dans laquelle chaque cellule contient une donnée du type « TYPE ».

L'instruction « MATRIX_FREE(a, N0, N1, TYPE) » libère l'espace mémoire précédemment alloué pour y enregistrer la matrice « a ». Ainsi, après l'exécution de cette instruction, d'autres données que celles de la matrice « a » peuvent être enregistrées dans cet espace mémoire libéré.

De plus, le langage V0 contient des instructions spécifiques pour accéder aux données d'une structure de données. Dans le cas particulier du code source 62, puisque les structures de données du code source 62 sont des matrices, ces instructions spécifiques sont notées « MATRIX_GET », « MATRIX_SET » et « MATRIX_ADD ».

L'instruction « MATRIX_GET(a, k, j) » renvoie la donnée stockée dans la cellule de la matrice « a » située à l'intersection de la ligne « j » et de la colonne « k ». Il s'agit donc d'une fonction de lecture d'une donnée dans une matrice.

L'instruction « MATRIX_SET(res, i, j, d) » enregistre la valeur « d » dans la cellule de la matrice « res » située à l'intersection de la ligne « j » et de la colonne « i ». Il s'agit donc d'une instruction d'écriture d'une donnée dans une matrice.

L'instruction « MATRIX_ADD(res, i, j, tmp_a*tmp_b) » ajoute le résultat de la multiplication scalaire des nombres tmp_a par le nombre tmp_b à la donnée contenue dans la cellule de la matrice « res » située à l'intersection de la ligne « j » et de la colonne « i ». Une fois cette instruction exécutée, la donnée précédemment contenue dans la cellule de la matrice « res » située à l'intersection de la ligne « j » et de la colonne « i » est remplacée par le résultat de cette addition. Cette instruction « MATRIX_ADD » est donc aussi une instruction d'écriture d'une donnée dans une matrice.

Le module 64 de compilation génère automatiquement à partir du code source d'un programme d'ordinateur, écrit en langage V0, un code exécutable 76 non-optimisé. Le code exécutable 76 est exécutable par le compilateur 40. À cet effet, il utilise le jeu d'instructions du langage machine du microprocesseur 56. Lors de la compilation du code source, le module 64 implémente, pour chaque structure de données déclarée dans le code source, un agencement standard prédéfini de cette structure de données dans la mémoire 58. Ainsi, lorsque le code exécutable 76 est exécuté par le microprocesseur 56, chaque structure de données est enregistrée dans la mémoire en utilisant le même agencement standard. De plus, le module 64 n'ajoute aucune instruction d'accès à la mémoire 34 dans le code exécutable 76.

Par exemple, dans le cas où les structures de données sont des matrices, l'agencement standard de chaque matrice dans la mémoire 58 est un agencement en ligne, plus connu sous le terme anglais de « row layout ». L'agencement en ligne est un agencement dans lequel les lignes de la matrice sont enregistrées les unes après les autres dans la mémoire. Pour faire cela, à chaque fois que le module 64 rencontre une instruction spécifique « MATRIX_ALLOCATE », il la remplace par un jeu d'instructions correspondant au langage C++ qui code cet agencement en ligne. Par la suite ce jeu d'instructions correspondant est appelé "jeu d'instructions standard" car il code l'agencement standard de la structure de données.

Un exemple d'un tel jeu d'instructions standard en langage C++ qui code l'agencement en ligne de la matrice « a » est représenté dans les lignes 18 à 20 du listing de l'annexe 2. Un autre exemple de jeu d'instructions standard pour la matrice « res » est visible dans les lignes 26 à 28 du listing de l'annexe 2.

Le module 64 remplace aussi chacune des autres instructions spécifiques du code source 62 par un jeu d'instructions correspondant en langage C++ qui code la fonction correspondante. Par exemple, ici, comme illustré par le listing de l'annexe 2 :

- l'instruction spécifique « MATRIX_DEFINE(TYPE, a) » est remplacée par l'instruction « int **a » en langage C++,
- l'instruction « MATRIX_SET(res, i, j, 0) » est remplacée par l'instruction « res[j][i] = 0 » en langage C++,
- l'instruction spécifique « MATRIX_GET(a, k, j) » est remplacée par l'instruction « a[j][k] » en langage C++, et
- l'instruction « MATRIX_ADD(res, i, j, tmp_a*tmp_b) » est remplacée par l'instruction « res[j][i] + = tmp_a*tmp_b » en langage C++.

Après avoir remplacé dans le code source 62 chacune des instructions spécifiques par le jeu d'instructions standard correspondant, le module 64 obtient un code source intermédiaire entièrement écrit en langage C++. Le module 64 est capable de compiler, par exemple de façon conventionnelle, ce code source intermédiaire pour obtenir le code exécutable 76.

Ici, les instructions spécifiques qui accèdent à une donnée d'une structure de données sont en plus associées à un jeu d'instructions permettant d'implémenter le module 68 de relevé. Lors du remplacement de chaque instruction spécifique qui accède à une donnée d'une structure de données par le jeu d'instructions correspondant en langage C++, le module 64 ajoute également automatiquement dans le code source intermédiaire un jeu d'instructions d'instrumentation associé à cette instruction spécifique d'accès. Typiquement, le jeu d'instructions d'instrumentation est ajouté dans le code source intermédiaire immédiatement avant ou après le jeu d'instructions correspondant à cette instruction spécifique d'accès. Le jeu d'instructions d'instrumentation est décrit plus en détail plus loin.

Le module 66 génère automatiquement, à partir du code source du programme d'ordinateur écrit en langage V0, un code exécutable 78 optimisé pour un calculateur comportant une mémoire secondaire comme le calculateur 4. Le code exécutable 78 est exécutable par le calculateur 4. À cet effet, il utilise le jeu d'instructions du langage machine du microprocesseur du calculateur 4. Le code exécutable 78 n'est donc pas nécessairement exécutable par le compilateur 40 lorsque le jeu d'instructions du langage machine du calculateur 4 est différent de celui du microprocesseur 56.

De plus, le module 66 remplace chacune des instructions spécifiques en langage V0 par un codage optimisé. Un codage optimisé est un jeu d'instructions, écrit ici en langage C++, qui utilise la mémoire 34 pour améliorer les performances du calculateur 4 lorsqu'il exécute le programme d'ordinateur.

Ici, le codage optimisé est sélectionné en fonction du motif d'accès relevé par le module 68. Sur ce point, le module 66 fonctionne de façon similaire à ce qui a été décrit dans le cas du module 64 de compilation sauf que le codage optimisé utilisé est différent du jeu d'instructions standard utilisé par le module 64 pour coder la même instruction spécifique.

Ainsi, le module 66 transforme automatiquement le code source 62 en un code source optimisé entièrement écrit en langage C++. Ensuite, le module 66 compile ce code source optimisé pour le calculateur cible 4. Cette compilation est par exemple, réalisée de façon conventionnelle.

Par contre, dans ce mode de réalisation, le module 66 de compilation ne modifie pas l'ordre, défini par le code source, dans lequel les instructions d'accès sont exécutées. Autrement dit, lorsque les données traitées sont identiques, l'ordre dans lequel les instructions d'accès sont exécutées par le calculateur 4 est le même que l'ordre dans lequel ces instructions d'accès sont exécutées par le compilateur 40 lorsqu'il exécute le code exécutable 76.

Le module 68 de relevé est apte à relever, lors de l'exécution du code exécutable 76 par le compilateur 40, et pour au moins une structure de données déclarée dans le code source, le motif d'accès à cette structure de données.

Un motif d'accès à une structure de données est une suite ordonnée temporellement d'identifiants de position des données de cette structure accédées les unes après les autres lors de l'exécution du code exécutable 76 par le microprocesseur 56. Ici, l'identifiant de position d'une donnée est choisi dans le groupe constitué :

- des indices qui permettent de repérer la position de la donnée à l'intérieur de la structure de données, et
- de l'adresse virtuelle, dans l'espace d'adressage du programme d'ordinateur, de la donnée accédée.

Les adresses virtuelles des données d'une même structure de données sont allouées par l'instruction "MATRIX_ALLOCATE" de sorte que la structure de données est située à l'intérieur d'une seule plage continue d'adresses virtuelles dans laquelle il n'existe pas de données qui n'appartiennent pas à cette structure de données, L'identifiant de position est donc ici soit un indice soit une adresse virtuelle.

Les indices qui permettent de repérer la position de la donnée à l'intérieur de la structure de données sont généralement utilisés pour construire l'adresse virtuelle de cette donnée à partir d'une adresse de base de la structure de données et des valeurs de ces indices. L'adresse de base de la structure de données est typiquement l'adresse virtuelle à laquelle débute l'espace mémoire dans lequel est stockée cette structure de données. Ici chaque structure de données est située à l'intérieur d'une seule plage continue d'adresses virtuelles de l'espace d'adressage du programme d'ordinateur. Autrement dit, à l'intérieur de cette plage, il n'existe pas de données qui n'appartiennent pas à cette structure de données. Dans le cas d'une matrice à deux dimensions, les indices correspondent aux numéros de ligne et de colonne à l'intersection desquelles se situe la donnée à accéder. Dans cet exemple de mode de réalisation, les identifiants de position utilisés sont les numéros de ligne et de colonne de la donnée accédée dans la matrice.

Il est souligné ici que le module 68 relève le motif d'accès à une structure de données. Ainsi, si le code source comporte plusieurs structures de données pour lesquelles les motifs d'accès doivent être relevés, le module 68 relève au moins un motif d'accès pour chacune de ces structures de données. Le motif d'accès à une structure de données particulière comporte uniquement les identifiants de position des données accédées à l'intérieur de cette structure de données. Pour distinguer les différents motifs d'accès que le module 68 relève, chaque motif d'accès relevé est associé à l'identifiant de la structure de données pour laquelle ce motif d'accès a été relevé.

Dans ce mode de réalisation, le module 68 est implémenté en instrumentant le code exécutable 76. Pour cela, par exemple, chaque instruction spécifique du langage V0 qui est une instruction d'accès à une donnée d'une structure de données est associée à un jeu d'instructions d'instrumentation. Le jeu d'instructions d'instrumentation est écrit en langage C++. Il permet, lorsqu'il est exécuté par le microprocesseur 56, de relever le motif d'accès à une structure de données.

À cet effet, ici, les instructions « MATRIX_SET », « MATRIX_GET », « MATRIX_ADD » sont, chacune, associées à un jeu d'instructions d'instrumentation qui, lorsqu'il est exécuté par le microprocesseur 56 :

- relève l'identifiant de la structure de données accédée et l'identifiant de position de la donnée accédée à l'intérieur de cette structure de données, puis
- ajoute cet identifiant de position relevée à la suite des identifiants de position déjà relevés pour cette même structure de données afin de compléter le motif d'accès relevé pour cette structure de données.

Dans le cas d'une matrice à deux dimensions, l'exécution de ce jeu d'instructions d'instrumentation relève l'identifiant de la matrice accédée et les numéros de ligne et de colonne de la donnée accédée à l'intérieur de cette matrice. Ensuite, ces numéros de lignes et de colonnes relevées sont ajoutés, respectivement, à un premier et à un second motifs d'accès. Les premier et second motifs d'accès relevés contiennent seulement les numéros, respectivement, de ligne et de colonne des données accédées.

De plus, dans ce mode de réalisation, le module 68 relève la taille de chaque structure de données pour laquelle un motif d'accès est relevé. À cet effet, l'instruction spécifique "MATRIX_ALLOCATE" est aussi associée à un jeu d'instructions d'instrumentation, en langage C++. Dans le cas de l'instruction spécifique "MATRIX_ALLOCATE", le jeu d'instructions d'instrumentation permet, lorsqu'il est exécuter, de relever la taille de la structure de données et de l'associer à l'identifiant de cette structure de données. Dans le cas d'une matrice, la taille relevée est le nombre de lignes et le nombre de colonnes de cette matrice. Ainsi, le code exécutable 76 est ici aussi instrumenté pour relever la taille de chaque structure de données pour laquelle un motif d'accès doit être relevé.

Le module 70 est apte à construire, à partir d'un motif d'accès relevé pour une structure de données, une signature caractéristique des accès à cette structure de données. Ici le module 70 est apte à construire une signature caractéristique :

- qui est indépendante du nombre d'accès à la structure de données au cours de la même exécution du code exécutable 76, et

- qui ne varie pas ou pratiquement pas d'une exécution à une autre du code exécutable 76.

À cet effet, le module 70 transforme le motif d'accès relevé en un motif d'accès transformé. Le motif d'accès transformé est identique au motif d'accès relevé, sauf que chaque identifiant de position relevé est remplacé par un identifiant de position relative. L'identifiant de position relative d'une donnée repère la position de cette donnée par rapport à une autre donnée de la même structure de données. Pour cela, le module 70 applique à chaque identifiant de position relevé, une fonction de transformation notée $f_{t,m}$ qui transforme cet identifiant de position relevé en un identifiant de position relative. Pour cela, la fonction $f_{t,m}$ :

- calcule un premier terme en fonction de l'identifiant de position relevé à remplacer,
- calcule un second terme en fonction d'un autre identifiant de position relevé appartenant au même motif d'accès relevé, puis
- calcule l'identifiant de position relative à partir de la différence entre ces premier et second termes.

Le premier terme est indépendant de l'identifiant de position utilisé pour calculer le second terme. De façon réciproque, le second terme est indépendant de l'identifiant de position à remplacer, utilisé pour calculer le premier terme.
Il existe un très grand nombre de fonctions $f_{t,m}$ possibles. La fonction $f_{t,m}$ permet d'obtenir une signature caractéristique apte à révéler un parcours particulier de la structure de données. Un parcours d'une structure de données est l'ordre temporelle dans lequel les données de la structure de données sont accédées, les unes après les autres, lors de l'exécution du programme d'ordinateur. Un parcours particulier est un parcours d'une structure de données qui est associé à un codage optimisé de la structure de données par la base de données 74.
Dans le cas du calculateur 4, pour accélérer l'exécution d'un programme d'ordinateur, il est préférable que les données de la structure de données soient enregistrées dans la mémoire 6, autant que possible, dans le même ordre que l'ordre dans lequel le microprocesseur 20 accède à ces données. En effet, cela améliore la localité des données. La localité des données est d'autant meilleure que la probabilité est élevée que des données, adjacentes à une donnée à laquelle le microprocesseur vient d'accéder, soient accédées à leur tour dans un futur proche. Dans le cas où la structure de données est une matrice, cela veut dire, par exemple, que si le programme d'ordinateur accède aux données de cette matrice ligne par ligne, alors l'agencement optimisé de la matrice dans la mémoire 6 est l'agencement en ligne. À l'inverse, si le programme d'ordinateur accède aux données de la matrice colonne par colonne, alors l'agencement optimisé de cette matrice dans la mémoire 6 est l'agencement en colonne.
Ici, la fonction $f_{t,m}$ est définie par les relations suivantes : $f_{t,m}(x_t) = (x_t - x_{t-1})$ et $f_{t,m}(y_t) = (Y_t - y_{t-1})$, où :

- $f_{t,m}(x_t)$ et $f_{t,m}(y_t)$ sont les identifiants de positions relatives, respectivement, de la ligne et de la colonne de la donnée accédée,
- $x_t$ et $y_t$ sont les numéros, respectivement, de ligne et de colonne de la donnée accédée à l'instant t, et
- $x_{t-1}$ et $y_{t-1}$ sont les numéros, respectivement, de ligne et de colonne de la précédente donnée accédée dans la même matrice à l'instant t-1.

Dans le motif d'accès relevé, les indices $x_{t-1}$ et $y_{t-1}$ sont les indices qui précèdent immédiatement les indices $x_t$ et $y_t$.
Le module 70 est aussi capable de construire, pour chaque motif d'accès transformé, la distribution statistique normalisée des identifiants de position relative contenus dans ce motif d'accès transformé. Une distribution statistique comporte des classes de valeurs possibles et, associé à chacune de ces classes, un nombre relié par une fonction, habituellement bijective, au nombre d'occurrence de cette classe. Ici, chaque distribution statistique normalisée comporte des classes prédéfinies. Chaque classe prédéfinie correspond à une ou plusieurs valeurs possibles de l'identifiant de position relative. Il y a suffisamment de classes pour couvrir toutes les valeurs possibles de l'identifiant de position relative. Ici, chaque classe correspond à une seule valeur possible de l'identifiant de position relative.
À chaque classe, la distribution statistique associe une quantité fonction du nombre de fois où la valeur de l'identifiant de position relative correspondant à cette classe apparaît dans le motif d'accès transformé. Ici, la distribution statistique est « normalisée », c'est-à-dire que la somme des quantités associées à chacune des classes de la distribution statistique est égale à un. À cet effet, la quantité associée à une classe est obtenue :

- en comptant le nombre d'occurrences de cette classe dans le motif d'accès transformé, puis
- en divisant ce nombre d'occurrences par le nombre total d'identifiants de position relative contenus dans le motif d'accès transformé.

La réunion des différentes distributions statistiques construites pour la même structure de données forme la signature caractéristique des accès à cette structure de données.

Le module 72 est capable de construire, pour chaque structure de données, une fonction numérique $P_S(x)$ de calcul de poids optimisés $w_{S,NbS}(k)$, où :

- l'indice "S" est un identifiant de la structure de données,
- NbS est le nombre de subdivisions de la structure de données S, et
- k est un numéro d'ordre identifiant la subdivision k de la structure de données S. Le numéro d'ordre k est un nombre entier qui varie de 1 à NbS.

Le poids $w_{S,NbS}(k)$ est égal à la taille du bloc de données à transférer entre la mémoire 6 et la mémoire 34 en réponse à l'exécution, par le calculateur 4, d'une instruction d'accès à une seule donnée de la subdivision k de la structure de données S. Typiquement, le poids $w_{S,NbS}(k)$ est inférieur au nombre de données contenues dans la subdivision k. En effet, dans le cas des matrices de grandes tailles, le nombre de données contenues dans une subdivision est souvent trop grand pour qu'elles soient toutes simultanément transférées dans la mémoire 34.

Une subdivision d'une structure de données est une partie de la structure de données comportant plusieurs données. Les adresses virtuelles des données d'une même subdivision sont toutes consécutives.

Dans ce texte, un poids $w_{S,NbS}(k)$ est dit "optimisé" lorsque sa valeur est obtenue à l'aide de la relation (1) suivante : $w_{S,NbS}(k) = F(C(D_{k,1}), ..., C(D_{k,n-1}), C(D_{k,n}), ..., C(D_{k,Dimk}))$, où :

- F() est une fonction croissante, c'est-à-dire une fonction qui croit dès que l'un quelconque des coefficients $C(D_{k,n})$ croit,
- Dimk est le nombre de données contenues dans la subdivision k,
- "k" est le numéro d'ordre identifiant la subdivision k,
- "n" est le numéro d'ordre identifiant la n-ième donnée $D_{k,n}$ de la subdivision k,
- $C(D_{k,n})$ est un coefficient défini par la relation suivante : $C(D_{k,n}) = Av(D_{k,n})/Occ(D_{k,n})$, où :

  - $Av(D_{k,n})$ est le nombre moyen d'accès à d'autres données de la structure de données entre deux accès consécutifs à la donnée $D_{k,n}$ lors de l'exécution du programme d'ordinateur pour une taille DimO de la structure de données S,
  - $Occ(D_{k,n})$ est le nombre de fois où la donnée $D_{k,n}$ a été accédée lors de l'exécution du code exécutable pour la taille DimO de la structure de données S,

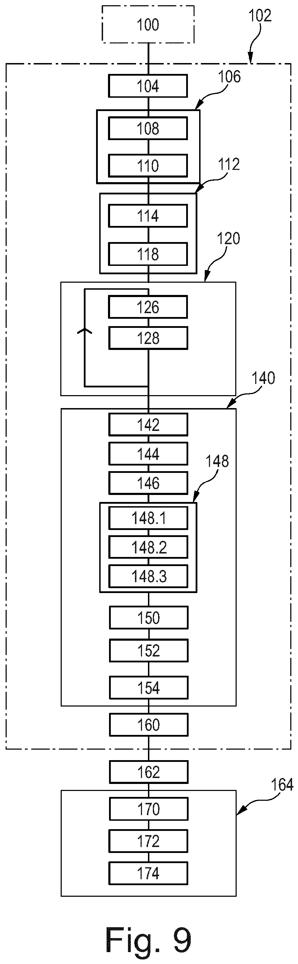

Il a été constaté que lorsque le poids $w_{S,NbS}(k)$ est calculé à l'aide de la relation (1), alors la vitesse d'exécution du programme d'ordinateur par le calculateur 4 est fortement accélérée. Typiquement, une accélération d'un facteur d'au moins deux ou dix est obtenue à partir du moment où la fonction F() est croissante. Il existe donc un grand nombre de fonction F() possible. Un exemple détaillé d'une telle fonction F() est décrit plus loin en référence au procédé de la figure 9.

La base 74 de données permet d'extraire une ou plusieurs signatures modèles associées à la fonction $f_{t,m}$. Une signature modèle est structurellement identique à une signature construite par le module 70. Plus précisément, une signature modèle est identique à la signature qui est construite par le module 70 lorsqu'il utilise cette fonction $f_{t,m}$ donnée et lorsque le microprocesseur parcourt les données de la structure de données en suivant un parcours particulier. Pour une même structure de données, le nombre de parcours particuliers différents possibles augmente en fonction du nombre de données contenues dans cette structure de données. Le nombre de parcours particuliers différents possibles pour une même structure de données est donc généralement très grand. Par la suite pour simplifier la description, seules quelques exemples de parcours particuliers sont décrits en détail. Toutefois, l'enseignement donné dans le cas particulier de ces quelques exemples peut être appliqué et transposé à tout autre parcours particulier possible. Par exemple, dans le cas où la structure de données est une matrice, les parcours particuliers pour lesquels il est possible d'extraire une signature modèle à partir de la base de données 74 sont ici :

- Un parcours P1, c'est-à-dire un parcours ligne par ligne lors duquel les lignes de la matrice sont accédées les unes après les autres.
- Un parcours P2, c'est-à-dire un parcours colonne par colonne lors duquel les colonnes de la matrice sont accédées les unes après les autres.
- Un parcours P3, c'est-à-dire un parcours de la diagonale principale (« Diagonal Major » en anglais), lors duquel seule la diagonale principale de la matrice est accédée.
- Un parcours P4, c'est-à-dire un parcours par ligne de blocs de deux par deux, puis par colonne à l'intérieur de chacun de ces blocs.
- Un parcours P5, c'est-à-dire un parcours colonne par colonne en sautant toutes les colonnes dont le numéro de colonne est pair.

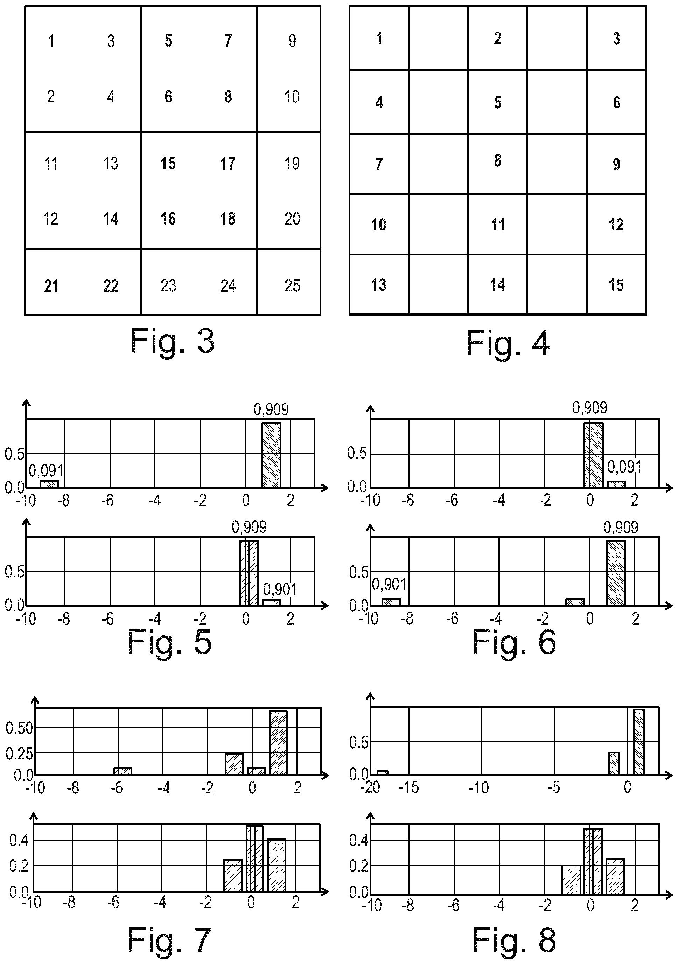

Des exemples des parcours P4 et P5 sont illustrés, respectivement, sur les figures 3 et 4. Dans ces figures, chaque chiffre est situé à l'intérieur d'une cellule de la matrice. Chaque chiffre indique le numéro d'ordre d'accès à cette cellule. Ainsi, l'accès aux cellules de ces matrices se fait selon l'ordre 1, 2, 3, 4... etc. Lorsqu'une cellule de la matrice ne comporte pas de numéro d'ordre, cela signifie que la donnée contenue dans cette cellule n'est pas accédée lors du parcours particulier de cette matrice. C'est notamment le cas du parcours particulier représenté sur la figure 4.

Généralement, pour un même parcours particulier d'une structure de données, la signature modèle varie en fonction de la taille de la structure de données. Ici, pour éviter d'enregistrer dans la base de données 74, pour chaque parcours particulier, autant de signatures modèles qu'il y a de tailles possibles pour la structure de données, la base de données 74 associe à la fonction $f_{t,m}$ un modèle de signature paramétré.

Ici, le paramètre du modèle de signature est la taille de la structure de données pour laquelle une signature modèle doit être extraite. Le modèle paramétré de signature est ici implémenté sous la forme d'un code exécutable par le microprocesseur 56. Ce modèle paramétré de signature génère, lorsqu'il est exécuté pour une valeur particulière du paramètre, la signature modèle correspondant à ce parcours particulier d'une structure de données de cette taille.

Les annexes 3 à 6 donnent les listings, en langage PYTHON, des modèles de signature correspondant aux parcours particuliers, respectivement, P1, P2, P3 et P4. Les figures 5 à 8 représentent les signatures modèles générées, après normalisation, par, respectivement :

- le modèle de signature de l'annexe 3 pour une matrice de dix lignes et de dix colonnes,
- le modèle de signature de l'annexe 4 pour une matrice de dix lignes et de dix colonnes,
- le modèle de signature de l'annexe 6 pour une matrice de sept lignes et de quatorze colonnes, et
- le modèle de signature de l'annexe 6 pour une matrice de vingt lignes et de vingt colonnes.

Dans ce mode de réalisation, pour une matrice, un premier motif d'accès transformé est obtenu à partir des numéros de ligne relevés et un second motif d'accès transformé est obtenu à partir des numéros de colonne relevés. Ainsi, dans ce mode de réalisation particulier, la signature caractéristique des accès à cette matrice comporte une première et une seconde distributions statistiques normalisées construite à partir, respectivement, des premier et second motifs d'accès transformés. De façon similaire, chaque signature modèle comporte donc une première et une seconde distributions statistiques. Chacune des figures 5 à 8 représente, en haut, la première distribution statistique et en bas la seconde distribution statistique. Sur chacune des figures 5 à 8, l'axe des abscisses représente les différentes valeurs possibles de l'identifiant de position relative et l'axe des ordonnées représente la quantité associée à chaque valeur de l'axe des abscisses. Les chiffres indiqués à côté de certaines barres des distributions statistiques représentées correspondent à la hauteur de cette barre.

Comme le montrent les figures 7 et 8, pour un même parcours particulier, la signature modèle varie en fonction de la taille de la matrice.

Dans les listings des annexes 3 à 6, les notations suivantes sont utilisées :

- « dimX » est le nombre de lignes de la matrice ;
- « dimY » est le nombre de colonnes de la matrice ;
- « deltaX » est un tableau qui contient les classes associées à une quantité non nulle dans la distribution statistique ;
- « deltaY » est un tableau qui contient les quantités non nulles associées à une classe de la distribution statistique ;
- « nbBlock_Y_ceil » est égal au nombre de bloc dans une colonne de la matrice.

Le langage PYTHON est un langage bien connu de l'homme du métier et bien documenté. Par conséquent, l'homme du métier est capable de comprendre et d'implémenter les différents modèles de signature donnés dans les annexes 3 à 6 sans explication complémentaire. De plus, pour simplifier ces listings, l'opération de normalisation de chacune des distributions statistiques de la signature modèle n'a pas été représentée. Cette opération de normalisation consiste typiquement à diviser chaque nombre d'occurrences de chaque distribution statistique par le nombre total de données accédées lors du parcours particulier de la matrice.

Les modèles de signature représentés dans les annexes 3 à 6 ont été établis en comparant, pour un même parcours particulier, différentes signatures construites en utilisant la fonction $f_{t,m}$, pour différentes tailles de la matrice. Cette comparaison permet d'identifier la ou les quantités de la distribution statistique qui varient en fonction de la taille de la matrice. Par exemple, dans le cas du parcours P1, ce qui varie en fonction de la taille de la matrice, c'est l'identifiant de position relative calculé au moment où l'on passe à la ligne suivante. Il peut facilement être observé qu'à ce moment-là, pour l'indice $x_t$, l'identifiant de position relative $f_{t,1}(x_t)$ est égal à 1-dimX. Le nombre d'occurrences de saut de ligne est quant à lui égal à dimY-1.

Il peut aussi être observé qu'en dehors de ces moments-là, l'indice $x_t$ est seulement incrémenté de 1 à chaque instant t. Dans ce cas, l'identifiant de position relative $f_{t,1}(x_t)$ calculé est égal à 1 et le nombre d'occurrences de la valeur « 1 » dans le motif d'accès transformé est égal à dimY*(dimX-1).

Dans le cas de parcours plus complexes, comme le parcours P4, le modèle de signature peut être construit en décomposant ce parcours plus complexe sous la forme d'une composition de plusieurs parcours particuliers simples. Par exemple, le parcours P4 peut être décomposé en :

- un parcours ligne par ligne des blocs, et
- un parcours colonne par colonne à l'intérieur de chaque bloc.

Le modèle de signature du parcours P4 est donc établi en composant les modèles de signature du parcours P1 avec le modèle de signature du parcours P2. Le fait de générer des signatures modèles en combinant entre eux plusieurs modèles de signatures permet, pour un même nombre de signatures modèles aptes à être générées, de réduire substantiellement le nombre de modèles de signatures et donc de réduire la taille de la base de données 74.

Les annexes 3 à 6 sont des modèles de signature paramétrés établis pour quelques exemples de parcours particuliers. Toutefois, en appliquant la même méthodologie, il est possible de construire un modèle de signatures paramétré pour tout autre parcours particulier. La méthodologie décrite ici permet aussi d'établir des modèles de signature par tous types de structures de données et n'est pas limitée au cas des matrices.

La base de données 74 associe également à chaque modèle de signatures les codages optimisés de chacune des instructions spécifiques du langage V0 utilisées pour créer, puis accéder et libérer une structure de données. La base de données 74 associe ainsi, à chaque modèle de signature établi pour un parcours particulier, les codages optimisés des instructions du langage V0 correspondant à ce parcours particulier. De préférence, la base de données 74 comporte donc plusieurs, et de préférence plus de cinq ou dix, modèles de signature, associés chacun à des codages optimisés respectifs des instructions du langage V0.

Par exemple, dans ce mode de réalisation, chaque modèle de signature est associée par la base 74 à une table de conversion. La table de conversion associe, à chaque instruction spécifique du langage V0, un codage optimisé générique à partir duquel le module 66 peut générer le codage optimisé spécifique à une structure de données particulières du code 62.

Ce codage optimisé est dit « générique », car il contient des paramètres qui sont remplacés par des valeurs ou des noms de variables du code source 62 au moment de la génération du code source optimisé par le module 66.

Trois exemples de tables de conversion sont données dans les annexes 7 à 9.

La table de conversion de l'annexe 7 contient dans la première colonne l'instruction spécifique en langage V0 et, dans la seconde colonne, le codage optimisé générique qui est associé à cette instruction spécifique. Le codage optimisé générique est celui utilisé par le module 66 pour générer le codage optimisé, en langage C++, correspondant à une structure de données particulière du code source 62. Chaque instruction spécifique contenue dans le code source 62 contient, pour chacun des paramètres du jeu générique qui lui est associé, une valeur ou le nom d'une variable. Lorsque le module 66 remplace l'instruction spécifique en langage V0 par le codage optimisé correspondant en langage C++, ils remplacent les paramètres du codage optimisé générique, associé à cette instruction spécifique par cette table de conversion, par les valeurs ou les noms de variables contenus dans l'instruction spécifique du code source 62.

Par exemple, le codage optimisé générique associé par la table de l'annexe 7 à l'instruction spécifique « MATRIX_ALLOCATE » contient quatre paramètres « TYPE », « NDL », « NDC », « NAME ». Ces paramètres « TYPE », « NDL », « NDC », « NAME » correspondent, respectivement, au type des données de la matrice, au nombre de lignes de la matrice, au nombre de colonnes de la matrice et au nom de la matrice.

Le code optimisé générique comporte une procédure de découpage fCut(TYPE, NBL, NBC, NAME) de la structure de données. Cette procédure fcut() est écrite en langage C++. Lorsqu'elle est exécutée, elle découpe la matrice en subdivisions et agence ces subdivisions les unes par rapport aux autres dans la mémoire principale 6. L'agencement des subdivisions dans la mémoire 6 consiste à placer les unes après les autres les subdivisions dans la mémoire 6 dans un ordre prédéterminé. A titre d'illustration, les trois premières lignes de la fonction fCut(), écrite en langage C++, illustre le fait que, dans la mémoire 6, la matrice est enregistrée sous la forme d'un agencement en lignes. Dans la colonne de droite des tables de conversion, le symbole "..." indique que la représentation d'une partie des instructions en langage C++ a été omise.

Dans le cas de l'agencement en ligne, typiquement, une subdivision correspond à une ligne de la matrice. Ainsi, la dimension DimS d'une subdivision est égale à la taille d'une ligne. Dans ce premier exemple, la dimension DimS est donc la même pour chacune des subdivisions de la matrice.

La dimension DimS dépend de l'agencement retenu pour enregistrer la structure de données dans la mémoire 6. Ainsi, par exemple, dans le cas d'un agencement en colonne comme celui de la table de conversion de l'annexe 8, une subdivision correspond à une colonne de la matrice. Dans ce cas, la dimension DimS est égale à la taille d'une colonne. Dans le cas d'un agencement par blocs de données comme celui décrit dans le cas du parcours P4, une subdivision est un bloc de données parcouru par colonnes. Dans ce dernier cas, la dimension DimS est égale à la taille d'un de ces blocs parcourus par colonne. Ainsi, le nombre NbS de subdivisions et la dimension DimS dépendent de l'agencement retenu pour enregistrer la structure de données et de la taille de la structure de données. Ainsi, ces nombres NbS et DimS sont connus uniquement lorsque l'agencement pour enregistrer une structure de données a été sélectionné et lorsque la taille de la structure de données est connue. Autrement dit, les valeurs de ces nombres NbS et DimS sont ici déterminées au moment où le code optimisé correspondant à l'instruction spécifique "MATRIX_ALLOCATE" est exécuté par le calculateur 4.

Le code générique optimisé associé à l'instruction MATRIX_ALLOCATE comporte aussi le code générique d'une procédure fTdl(NbS) de calcul de poids optimisés.

La procédure fTdl(NbS) est paramétrée par le nombre NbS de subdivisons de la structure de données obtenu après l'exécution de la procédure fCut(). Cette procédure fTdl() a pour fonction principale de calculer le poids optimisé $w_{S,NbS}(k)$ associé à chaque subdivision k de la structure de données S. Ici, cette procédure fTdl(NbS) génère aussi une table d'indirection Tdl qui à chaque identifiant d'un subdivision k de la structure de données S associe :

- le poids $w_{S,NbS}(k)$ correspondant à cette subdivision k,
- un champ "statut" qui pour chaque donnée contenue dans la subdivision k contient des informations permettant de savoir comment accéder à cette donnée.

Par la suite, on note $B_{k,l}$ le bloc de données qui est utilisé pour transférer une donnée $D_{k,n}$ entre les mémoires 6 et 34. Chaque bloc $B_{k,l}$ comporte $w_{S,NbS}(k)$ données. Les $w_{S,NbS}(k)$ données du bloc $B_{k,l}$ sont toutes situées à des adresses immédiatement consécutives dans la mémoire 6. Ce bloc $B_{k,l}$ débute par une donnée $D_{k,l}$. Le numéro d'ordre "l" indique la position de cette donnée $D_{k,l}$ par rapport au début de la subdivision k. Ici, ces $w_{S,NbS}(k)$ données sont également toutes situées à des adresses immédiatement consécutives dans la mémoire 34 après leur transfert dans cette mémoire 34. Par exemple, ici, chaque bloc $B_{k,l}$ est construit en appliquant la méthode de construction suivante. Lorsque la donnée $D_{k,n}$ ne se situe pas sur un bord de la subdivision k, alors le bloc $B_{k,l}$ contient autant de données situées avant et après la donnée $D_{k,n}$. Autrement dit, la donnée $D_{k,n}$ se trouve au milieu du bloc $B_{k,l}$. Lorsque la donnée $D_{k,n}$ se trouve sur un bord de la subdivision k, le bloc $B_{k,l}$ débute ou se termine sur ce bord. Ainsi, grâce à cette méthode de construction, aucun bloc $B_{k,l}$ n'empiète sur les subdivisions k-1 et k+1 voisines de la subdivision k. Dans ce cas, le champ "statut" contient notamment pour chaque donnée $D_{k,n}$ de la subdivision k:

- une information indiquant si cette donnée $D_{k,n}$ est déjà présente dans la mémoire 34 ou pas,
- une information indiquant si cette donnée $D_{k,n}$ a été modifié, dans la mémoire 34, depuis son transfert dans cette mémoire 34, et
- une information permettant de retrouver à quelle adresse cette donnée $D_{k,n}$ est enregistrée dans la mémoire 34.

A titre d'illustration, l'information qui permet de retrouver l'adresse de la donnée $D_{k,n}$ dans la mémoire 34 est une table qui associe :

- le numéro d'ordre "l" de la première donnée $D_{k,l}$ de chaque bloc $B_{k,l}$ de données transféré dans la mémoire 34, et
- l'adresse virtuelle $@_{k,l}$, dans la mémoire 34, de cette donnée $D_{k,l}$.

Ainsi, lorsque l'écart entre le numéro d'ordre "n" de la donnée $D_{k,n}$ et l'un des numéros d'ordre "l" est inférieur à $w_{S,NbS}(k)$ cela signifie que la donnée $D_{k,n}$ appartient au bloc débutant par la donnée $D_{k,l}$. Cette information permet donc aussi de savoir si la donnée $D_{k,n}$ est déjà présente dans la mémoire 34. L'écart entre les numéros d'ordre "l" et "n" donne la position de la donnée $D_{k,n}$ par rapport à la donnée $D_{k,l}$. Dès lors, par exemple, l'adresse virtuelle $@_{k,n}$ de la donnée $D_{k,n}$ dans la mémoire 34 est obtenue à l'aide de la relation suivante : $@_{k,n} = @_{k,l} + (n-l)O$, où O est la taille d'une donnée en octet.

Cette procédure fTdl() est décrite plus en détail en référence au procédé de la figure 9.

Le codage optimisé générique associé par la table de l'annexe 7 à l'instruction spécifique « MATRIX_GET » contient les trois paramètres « NDL », « NDC », « NAME ». Le code optimisé générique associé à cette instruction spécifique comporte un procédure fGet(NAME, NDL, NDC) de chargement d'une donnée de la structure de données à partir de la mémoire. La fonction fGet() détermine, lorsqu'elle est exécutée par la calculateur 4, l'adresse virtuelle $@_{k,n}$ de la donnée $D_{k,n}$ à charger dans un registre du microprocesseur 20 à partir de l'identifiant NAME de la matrice et des numéros de ligne et de colonne NDL, NDC de cette donnée $D_{k,n}$. Pour cela, la procédure fGet() identifie dans quelle subdivision k de la structure de données, la donnée $D_{k,n}$ à charger se trouve à partir des numéros de ligne NDL et de colonne NDC. La procédure fGet() retrouve aussi le numéro d'ordre "n" de la donnée $D_{k,n}$ dans la subdivision k à partir de ces numéros NDL et NDC. Ensuite, elle consulte le champ "statut" associé à cette subdivision k par la table d'indirection Tdl construite par l'exécution de la fonction fCut(). Si le champ "statut" indique que la donnée $D_{k,n}$ appartient à un bloc $B_{k,l}$ qui est déjà dans la mémoire 34, la procédure fGet() détermine l'adresse virtuelle $@_{k,n}$ de cette donnée $D_{k,n}$ dans la mémoire 34 à partir de l'adresse $@_{k,l}$ à laquelle débute ce bloc $B_{k,l}$ et du numéro d'ordre "n" de la donnée $D_{k,n}$. Si le champ "statut" indique que la donnée $D_{k,n}$ n'est pas dans la mémoire 34 et si le poids $w_{S,NbS}(k)$ est supérieur à un, alors la procédure fGet() déclenche l'exécution d'une procédure de transfert fLoad(NAME, NDL, NDC). Ici, les instructions de la procédure fLoad() sont intégrées à l'intérieur de la procédure fGet(). Ceci est représenté dans la table de conversion de l'annexe 7 par le fait que la procédure fLoad() se trouve entre les accolades qui suivent la déclaration de la procédure fGet(). Après son exécution, la procédure fLoad() retourne un code qui indique si oui ou non un bloc $B_{k,l}$, contenant la donnée $D_{k,n}$, a été transférée dans la mémoire 34. Dans l'affirmative, l'adresse virtuelle $@_{k,n}$, dans la mémoire 34, de la donnée $D_{k,n}$ est déterminée comme décrit ci-dessus. Dans les autres cas et notamment si le code renvoyé par la procédure fLoad() indique que la donnée $D_{k,n}$ n'a pas été transférée dans la mémoire 34, alors la procédure fGet() détermine l'adresse virtuelle $@_{k,n}$ de la donnée $D_{k,n}$ dans la mémoire 6. Par exemple, classiquement, la procédure fGet() détermine l'adresse $@_{k,n}$ de la donnée $D_{k,n}$ dans la mémoire 6 à partir de l'adresse à la quelle débute la structure de données enregistrée dans la mémoire 6 et des numéros de ligne NDL et de colonne NDC. Enfin, la donnée $D_{k,n}$ est chargée dans un registre du microprocesseur 20 en exécutant une instruction de chargement paramétrée par l'adresse $@_{k,n}$ déterminée. Ainsi, si l'adresse $@_{k,n}$ correspond à une adresse de la mémoire 34, la donnée $D_{k,n}$ est chargée à partir de la mémoire 34. A l'inverse, si l'adresse $@_{k,n}$ correspond à une adresse de la mémoire 6, la donnée $D_{k,n}$ est chargée à partir de la mémoire 6. A ce stade, il est souligné que le chargement à partir de la mémoire 6 se fait de façon conventionnelle et notamment en utilisant le mécanisme de mémoire cache. Ainsi, dans les faits, l'expression "charger à partir de la mémoire 6" couvre aussi les situations où la donnée $D_{k,n}$ ou le bloc $B_{k,l}$ de données est chargé à partir de la mémoire cache 22 ou de la mémoire tampon 26. En effet, le programme d'ordinateur exécuté ne gère pas les accès à la mémoire cache 22 et à la mémoire tampon 26. Comme expliqué précédemment, ceci est géré par le système d'exploitation et le micro-calculateur 32 de façon autonome et indépendamment du code du programme d'ordinateur exécuté. Ainsi, du point de vue du programme d'ordinateur exécuté, la mémoire cache 22 et la mémoire tampon 26 ne sont pas visibles de sorte qu'il connaît uniquement la plage d'adresses de la mémoire 6. Dès lors, même si en réalité la donnée ou le bloc de données est fourni à partir de la mémoire cache 22 ou de la mémoire tampon 26, le programme d'ordinateur n'en a pas connaissance. Ainsi, de son point de vue, cette donnée ou ce bloc de données est simplement chargé à partir de la mémoire 6.

La procédure fLoad(NAME, NDL, NDC) est un code générique paramétré par l'identifiant NAME de la structure de données et les numéros de ligne NDL et de colonne NDC de la donnée $D_{k,n}$ à transférer dans la mémoire 34. Lorsqu'elle est exécutée par le calculateur 4, cette procédure fLoad() détermine à partir des paramètres NAME, NDL et NDC, l'identifiant k de la subdivision qui contient la donnée $D_{k,n}$ à transférer dans la mémoire 34 ainsi que son numéro d'ordre "n" dans cette subdivision k. Ensuite, à partir de l'identifiant k de la subdivision et de la table d'indirection Tdl créée par l'exécution de la procédure fCut(), la procédure fLoad() sélectionne le poids $w_{S,NbS}(k)$ associé à cette subdivision k. Ensuite, un bloc $B_{k,l}$ de $w_{S,NbS}(k)$ données et contenant la donnée $D_{k,n}$ est construit, par exemple, comme décrit ci-dessus. Après cela, la procédure fLoad() sélectionne un emplacement dans la mémoire 34 où ce bloc $B_{k,l}$ peut être écrit. Pour cela, la procédure fLoad() commence par vérifier s'il existe un emplacement libre dans la mémoire 34 capable de contenir ce bloc $B_{k,l}$. Dans l'affirmative, cette emplacement est sélectionné. Dans la négative, la procédure fLoad() sélectionne dans la mémoire 34 le ou les blocs de données associés à un poids plus faible que le poids $w_{S,NbS}(k)$ de la subdivision k auquel appartient ce bloc $B_{k,l}$. A chaque fois que le champ "statut", associé à l'un de ces blocs de poids plus faibles sélectionnés, indique qu'au moins l'un de ces blocs a été modifié dans la mémoire 34 depuis son chargement dans cette mémoire, alors la procédure fLoad() recopie ce bloc de données modifié dans la mémoire 6. Enfin, la procédure fLoad() transfert depuis la mémoire 6 vers l'emplacement sélectionné dans la mémoire 34, le nouveau bloc $B_{k,l}$ de $w_{S,NbS}(k)$ données. Ce nouveau bloc $B_{k,l}$ transféré contient notamment la donnée $D_{k,n}$. L'adresse $@_{k,l}$, dans la mémoire 34, à laquelle débute le bloc transféré est mémorisée dans le champ "statut" associé au numéro d'ordre "l" et à la subdivision k de la table d'indirection Tdl.

S'il n'existe aucun bloc dans la mémoire 34 qui appartient à une subdivision associée à un poids inférieur au poids $w_{S,NbS}(k)$, alors le bloc $B_{k,l}$ n'est pas transféré dans la mémoire 34. Dans ce cas, la procédure fLoad() retourne un code particulier à la procédure appelante qui indique que la donnée $D_{k,n}$ doit être accédée à partir de la mémoire 6 et non pas à partir de la mémoire 34.

Le codage optimisé générique associé par la table de l'annexe 7 à l'instruction spécifique « MATRIX_SET » contient les quatre paramètres « NDL », « NDC », « NAME » et "VALUE". Le paramètre "VALUE" est destiné à contenir la valeur à écrire dans la mémoire 6. Le code optimisé générique associé à cette instruction spécifique comporte un procédure fSet(NAME, NDL, NDC, VALUE) d'écriture d'une donnée de la structure de données dans la mémoire. La fonction fSet() détermine, lorsqu'elle est exécutée par la calculateur 4, l'adresse virtuelle $@_{k,n}$ de la donnée $D_{k,n}$ à écrire. L'adresse $@_{k,n}$ est une adresse située dans la mémoire 34 si la donnée $D_{k,n}$ se trouve déjà dans cette mémoire 34. A l'inverse, l'adresse $@_{k,n}$ est une adresse située dans la mémoire 6 si la donnée $D_{k,n}$ ne se trouve pas déjà dans la mémoire 34. Par exemple, l'adresse $@_{k,n}$ est déterminée de façon similaire à ce qui a été décrit pour la procédure fGet(). Ensuite, si le champ "statut" indique que le bloc $B_{k,l}$ de données contenant la donnée $D_{k,n}$ à écrire est déjà dans la mémoire 34, alors la valeur VALUE est écrite, par le microprocesseur 20, à l'adresse $@_{k,n}$, située dans la mémoire 34, en exécutant une instruction d'écriture paramétrée par l'adresse $@_{k,n}$ déterminée et la valeur VALUE. Ensuite, le champ "statut" est mis à jour pour indiquer que la donnée $D_{k,n}$ a été modifiée. Dans ce cas, l'exécution de la fonction fSet() ne déclenche aucune écriture dans la mémoire 6.

A l'inverse, si le champ "statut" indique que le bloc $B_{k,l}$ de données contenant la donnée $D_{k,n}$ à écrire n'est pas dans la mémoire 34, alors la valeur VALUE est écrite, par le microprocesseur 20, à l'adresse $@_{k,n}$, située dans la mémoire 6, en exécutant une instruction d'écriture paramétrée par l'adresse $@_{k,n}$ déterminée et la valeur VALUE. De plus, uniquement si le poids $w_{S,NbS}(k)$, associé au bloc $B_{k,l}$, est supérieur à un, alors la procédure fSet() déclenche elle aussi l'exécution de la procédure fLoad() pour charger la donnée $D_{k,n}$ dans la mémoire 34. Ensuite, si la donnée $D_{k,n}$ a été chargée dans la mémoire 34, le champ "statut" est mis à jour pour indiquer que la donnée $D_{k,n}$ est maintenant présente dans la mémoire 34.

Le codage optimisé générique associé par la table de l'annexe 7 à l'instruction spécifique "MATRIX_ADD" se déduit des explications données ci-dessus. Typiquement, le codage optimisé générique associé à cette instruction spécifique est une combinaison des codages optimisés génériques associés aux instructions spécifiques "MATRIX_GET" et "MATRIX_SET".

Le codage optimisé générique associé par la table de l'annexe 7 à l'instruction spécifique « MATRIX_FREE » contient les trois paramètres « NBL », « NBC », « NAME ». Le code optimisé générique associé à cette instruction spécifique comporte un procédure fFree(NAME, NDL, NDC) de libération de l'espace mémoire alloué dynamiquement à la structure de donnée NAME. Les deux premières lignes de la procédure fFree() sont une illustration d'instructions en langage C++ qui permettent de libérer l'espace mémoire alloué pour stocker la structure de données. De plus, la procédure fFree() comporte aussi des instruction qui effacent et libèrent l'espace mémoire dans lequel la table Tdl associé à la structure de données était stockée.

Les annexes 8 et 9 représentent, les tables de conversion correspondant aux codages optimisés associés, par la base de données 74, aux modèles de signature, respectivement, des annexes 4 et 5. Ces tables sont identiques à la table de l'annexe 7, sauf que le codage optimisé générique associé à l'instruction spécifique « MATRIX_ALLOCATE » enregistre la matrice dans la mémoire :

- sous la forme d'une suite de colonnes et non pas sous la forme d'une suite de lignes dans l'annexe 8, et
- sous une forme optimisée pour la parcours P3 dans l'annexe 9.

Ainsi, les procédures fCut() des annexes 8 et 9 sont différentes de la procédure fCut() de l'annexe 7. En effet, la taille et le nombre de subdivisions ne sont pas les mêmes que dans le cas de l'annexe 7. Toutefois, à part cette différence, ces tables sont ici identiques.

Le fonctionnement du compilateur 40 va maintenant être décrit en référence au procédé de la figure 9.

Initialement, lors d'une phase 100 de conception, un développeur écrit, en langage V0, le code source 62 du programme d'ordinateur. Ce code est écrit sans spécifier l'agencement des structures de données en mémoire et sans non plus nécessairement introduire des instructions d'accès à la mémoire secondaire 34. Par exemple, ici, le code source 62 est dépourvu d'instruction d'accès à la mémoire 34. Ainsi, l'écriture de ce code source est conventionnelle, sauf que pour au moins une des structures de données de ce code source, le développeur utilise les instructions spécifiques du langage V0 au lieu d'utiliser des instructions conventionnelles du langage C++. Par exemple, dans le cas du code source 62 de l'annexe 1, chaque création d'une matrice et chaque accès aux données des matrices sont codés en utilisant les instructions spécifiques du langage V0.

Une fois le code source 62 écrit, une phase 102 de compilation du code source 62 par le compilateur 40 débute. Cette phase 102 débute par une étape 104 d'acquisition du code source 62 et de fourniture de la base de données 74. À l'issue de cette étape, le code source 62 et la base de données 74 sont enregistrés dans la mémoire 58 du compilateur 40.

Ensuite, lors d'une étape 106, le module 64 de compilation génère le code exécutable 76 à partir du code source 62.

Pour cela, lors d'une opération 108, le module 64 transforme le code source 62 en un code source intermédiaire instrumenté, uniquement écrit en langage C++. Cette transformation consiste à remplacer chaque instruction spécifique du langage V0 du code source 62 par la concaténation du jeu d'instructions correspondant en langage C++ et du jeu d'instructions d'instrumentation associé à cette instruction spécifique. Par défaut, lors de cette première compilation du code source 62, pour chaque structure de données du code source 62, c'est le jeu d'instructions standard qui est utilisé. Par conséquent, dans ce mode de réalisation, chaque structure de données est enregistrée dans la mémoire, lors de l'exécution du code exécutable, en utilisant l'agencement standard.

A l'issue de l'opération 108, le code source intermédiaire instrumenté est uniquement rédigé en langage C++ et comporte pour chaque structure de données, les instructions qui permettent de relever l'identifiant de cette structure de données et les identifiants de position des données accédées à l'intérieur de cette structure de données.

Lors d'une opération 110, le code source intermédiaire obtenu à l'issue de l'opération 108 est compilé pour générer le code exécutable 76.

Lors d'une étape 112, le microprocesseur 56 du compilateur 40 exécute le code exécutable 76.

Lors de cette exécution, les tailles des matrices "a", "b" et "res" sont acquises lors d'une opération 114. Par exemple, pour cela, les dimensions N0, N1 et N2 sont saisies par l'utilisateur à l'aide de l'interface 42 du compilateur 40 lors de l'exécution du code 76. La taille initiale, acquise lors de l'opération 114, pour une structure de donnée est notée, par la suite, DimO.

Ensuite, le microprocesseur 56 alloue dynamiquement pour chaque structure de données un espace mémoire dans la mémoire principale 6 pour y enregistrer les données de cette structure de données. Ensuite, le microprocesseur 56 accède aux données de la structure de données dans l'ordre défini dans le code source 62 et donc selon un parcours codé par le développeur du code source 62. Enfin, le microprocesseur libère l'espace mémoire alloué dynamiquement lorsque la structure de données n'est plus utilisée.

En réponse à l'allocation dynamique d'un espace mémoire pour y enregistrer une structure de données, un pointeur vers le début de cet espace mémoire est généré. Ce pointeur est typiquement égal à une adresse virtuelle appelée ici « adresse virtuelle de base » à laquelle débute cet espace mémoire. Ici, ce pointeur constitue l'identifiant de la structure de données ou est associé à l'identifiant de la structure de données.

Lors de chaque accès à une donnée de la structure de données, le microprocesseur 56 commence par construire l'adresse virtuelle de cette donnée à partir de l'adresse de base et des valeurs des indices qui repèrent la position de cette donnée à l'intérieur de la structure de données.

Ensuite, il exécute l'instruction d'accès à cette donnée. Cette instruction d'accès peut être une instruction d'écriture ou de lecture de la donnée. Cette instruction d'accès contient un opérande à partir duquel l'adresse virtuelle de la donnée accédée est obtenue. Ces instructions correspondent ici aux instructions codées dans les lignes 33 et 36 à 38 du listing de l'annexe 1.

Entre deux accès aux données de la structure de données, le microprocesseur 56 exécute une instruction qui modifie le ou les indices de sorte que lors de l'exécution de la prochaine instruction d'accès, c'est la donnée suivante de la structure de données qui est accédée. Dans le listing de l'annexe 1, cela correspond à l'incrémentation des indices j, i et k visibles dans les lignes, respectivement, 29, 31 et 34 de ce listing.

Lors de cette exécution du code exécutable 76, le microprocesseur 56 exécute aussi les instructions correspondant aux jeux d'instructions d'instrumentation introduits dans le code source intermédiaire par le module 64 de compilation. Ainsi, lors de l'étape 112, le module 68 de relevés des motifs d'accès est aussi exécuté par le microprocesseur 56 en même temps que le code exécutable 76.

Dès lors, lors d'une opération 118, à chaque fois que le microprocesseur 56 accède à une donnée d'une structure de données, le module 68 relève :

- l'identifiant de cette structure de données, et
- les identifiants de position de la donnée accédée à l'intérieur de cette structure de données.

Dans ce mode de réalisation, les identifiants de la position de la donnée correspondent, respectivement, au numéro de ligne $x_t$ et au numéro de colonne $y_t$ à l'intersection desquels se situe la donnée accédée. Dans le listing de l'annexe 1, cela correspond donc aux valeurs de deux des indices choisis parmi les indices i, j et k qui sont utilisés, dans le code source, pour désigner les numéros de ligne et de colonne.

Ensuite, le module 68 ajoute au motif d'accès construit spécifiquement pour cette structure de données, les valeurs relevées des indices. Ainsi, par exemple, à chaque fois que la matrice « a » du code source 62 est accédée, le module 68 relève les valeurs des indices $x_{a,t}$, $y_{a,t}$ de la donnée accédée dans cette matrice. Ici, les indices $x_{a,t}$ et $y_{a,t}$ correspondent, respectivement, aux valeurs des indices k et j de la ligne 36 du listing de l'annexe 1. Ensuite, le module 68 ajoute à un motif d'accès $MA_{xa}$ spécifiquement associé à la matrice « a » et contenant les précédentes valeurs relevées pour l'indice $x_{a,t}$, la nouvelle valeur relevée. Ainsi, le motif d'accès $MA_{xa}$ se présente sous la forme d'une suite $\{x_{a,1} ; x_{a,2} ;... ; x_{a,t}\}$ de numéros de ligne classés dans l'ordre des instants où ces numéros ont été relevés.

En parallèle, le module 68 ajoute, à un second motif d'accès $MA_{ya}$ spécifiquement associé à la matrice « a » et contenant les précédentes valeurs relevées pour l'indice $y_{a,t}$, la nouvelle valeur relevée. Ainsi, ce motif d'accès $MA_{ya}$ se présente sous la forme d'une suite $\{y_{a,1} ; y_{a,2} ;... ; y_{a,t}\}$ de numéros de colonne classés dans l'ordre des instants où ces numéros ont été relevés.

De plus, dans ce mode de réalisation, à chaque fois qu'un espace mémoire est dynamiquement alloué pour y enregistrer une structure de données, le module 68 relève la taille de cet espace mémoire. Ici, dans le cas où les structures de données sont des matrices à deux dimensions, le module 68 relève le nombre de lignes dimX et le nombre de colonnes dimY et les associe à l'identifiant de cette matrice. Cette information est par exemple enregistrée dans la mémoire 58.

Ensuite, lors d'une étape 120 et après la fin de l'exécution du code 76, le module 70 construit pour chaque structure de donnée la signature caractéristique des accès à cette structure de données.

Lors d'une opération 126, le module 70 transforme alors chacun des motifs d'accès relevés pour une structure de données en un motif d'accès transformé en appliquant la fonction $f_{t,m}$ sélectionnée. Ainsi, dans le cas de la matrice « a », les motif d'accès $MA_{xa}$ et $MA_{ya}$ sont transformés en motifs d'accès transformés, respectivement, $MAT_{xa}$ et $MAT_{ya}$.

Le motif d'accès $MAT_{xa}$ est égal à la suite d'identifiants de position relative $\{f_{t,m}(x_2) ; f_{t,m}(x_3) ; \dots ; f_{t,m}(x_{a,n})\}$, c'est-à-dire égal à la suite $\{x_{a,2}\text{-}x_{a,1} ; x_{a,3}\text{-}x_{a,2} ; \dots ; X_{a,n}\text{-}X_a, n\text{-}1\}$, où n est égal au nombre total d'éléments du motif d'accès $MA_{xa}$. De façon similaire, le motif $MAT_{ya}$ est égal à la suite $\{f_{t,m}(y_{a,2}) ; f_{t,m}(y_{a,3}) ; \dots ; f_{t,m}(y_{a,n})\}$, c'est-à-dire égal à la suite $\{y_{a,2}\text{-}y_{a,1} ; y_{a,3}\text{-}y_{a,2} ; \dots ; y_{a,n}\text{-}y_{a,n-1}\}$.

Ensuite, lors d'une opération 128, le module 70 construit les distributions statistiques normalisées $DS_{xa}$ et $DS_{ya}$ des valeurs, respectivement, des motifs d'accès $MAT_{xa}$ et $MAT_{ya}$.

La construction de la distribution statistique est conventionnelle. La normalisation de la distribution statistique construite consiste ici à diviser le nombre d'occurrence de chaque classe dans le motif d'accès transformé, par le nombre n-1 d'éléments de ce motif d'accès transformé.

La réunion des distributions statistiques $DS_{xa}$ et $DS_{ya}$ constitue la signature caractéristique construite pour les accès à la matrice « a » lors de l'exécution du code exécutable 76 par le microprocesseur 56.

Les opérations 126 à 128 sont réitérées pour chacune des structures de données pour lesquelles le module 68 a relevé des motifs d'accès lors de l'étape 112.

Une fois que la signature caractéristique a été construite pour chacune des structures de données accédées, le compilateur 40 procède à une étape 140 d'optimisation automatique du programme d'ordinateur pour le calculateur 4. Pour cela, pour chaque structure de données, il procède comme suit.

Lors d'une opération 142, le module 66 de compilation extrait de la base de données 74 les différentes signatures modèles susceptibles de correspondre à la signature construite pour cette structure de données. Ici, à cet effet, il sélectionne dans la base de données 74, les modèles de signature construit à l'aide de la fonction $f_{t,m}$.

Puis, à l'aide de chaque modèle de signatures sélectionné et en remplaçant dans ce modèle de signature les variables dimX et dimY par les valeurs relevées lors de l'opération 118, le compilateur 40 construit la signature modèle d'un parcours particulier des données à l'intérieur d'une matrice de même taille.

Lorsque le modèle de signature sélectionné comporte une variable dont la valeur n'est pas connue, alors le module de compilation 66 exécute ce modèle de signature pour chacune des valeurs possibles de cette variable. Ainsi, dans ce cas, à partir d'un même modèle de signature et pour la même taille de la structure de données, plusieurs signatures modèles sont générées. C'est par exemple le cas, lorsque le modèle de signatures de l'annexe 6 est sélectionné. En effet, ce modèle de signature comporte la variable « nbBtock_Y_ceil » dont la valeur n'est pas relevée par le module 68. Les valeurs possibles de la variable « nbBlock_Y_ceil » sont les nombres entiers compris entre 1 et dimY.

Lors d'une opération 144, le module 66 de compilation compare la signature construite à chaque signature modèle extraite de la base de données 74 lors de l'opération 142.

Ici, pour faire cette comparaison entre la signature construite et la signature modèle, le module 66 calcule un coefficient de corrélation entre chaque distribution statistique de la signature construite et la distribution statistique correspondante de la signature modèle. Dans ce mode de réalisation, ce coefficient de corrélation est une adaptation du coefficient connu sous le terme de « coefficient de Pearson ». Ce coefficient est défini par la relation (2) suivante :

$$\rho\left(DS_c, DS_m\right) = \frac{1}{N} \frac{\sum_{i=0}^{N-1}\left(DS_c[i] - E_{DSc}\right)\left(DS_m[i] - E_{DSm}\right)}{\sigma_s \sigma_{s'}}$$

où :

- $\rho(DS_c, DS_m)$ est le coefficient de corrélation,
- $DS_c$ et $DS_m$ sont, respectivement, la distribution statistique construite et la distribution statistique modèle comparées,
- N est le nombre total de classes de la distribution statistique comparée,
- $DS_c[i]$ est la quantité associée à la $i^{ème}$ classe par la distribution statistique $DS_c$,
- $DS_m[i]$ est la quantité associée à la $i^{ème}$ classe par la distribution statistique $DS_m$,
- $E_{DSC}$ et $E_{DSm}$ sont les espérances mathématiques, respectivement, des distributions statistiques $DS_c$ et $DS_m$,
- $\sigma_{DSc}$ et $\sigma_{DSm}$ sont les écarts types, respectivement, des distributions statistiques $DS_c$ et $DS_m$.

Ensuite, le coefficient de corrélation entre la signature construite et une signature modèle est pris égal à la moyenne des coefficients de corrélation calculés pour chacune des distributions statistiques de la signature construite.

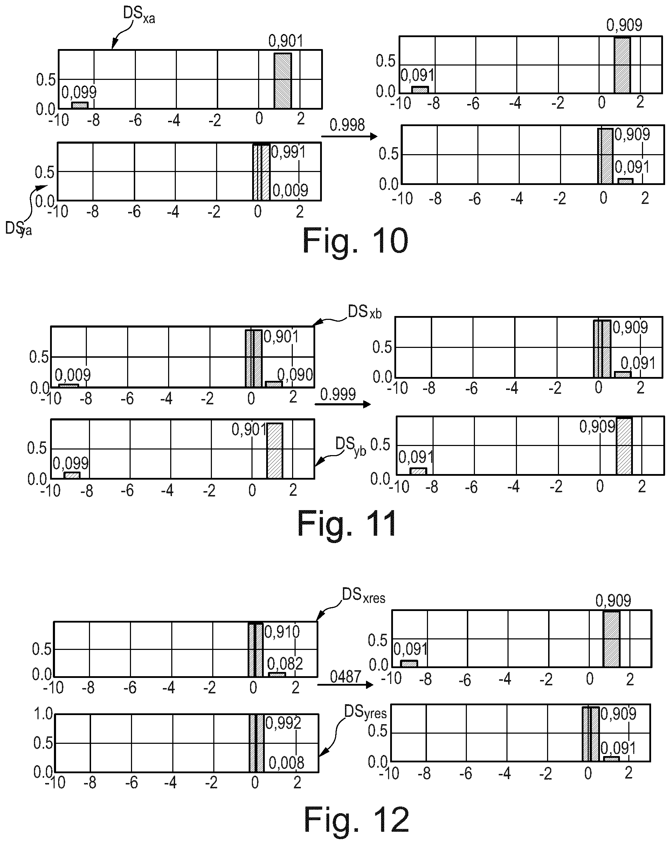

La figure 10 représente, à gauche, les deux distributions statistiques $DS_{xa}$ et $DS_{ya}$ construites pour la matrice « a » lors de l'étape 120 dans le cas où la taille de la matrice « a » est de dix lignes et de dix colonnes.

La figure 10 représente, à droite, les deux distributions statistiques de la signature modèle extraite de la base de données 74 et qui présentent le coefficient de corrélation le plus élevé avec la signature construite. Dans ce cas, il s'agit de la signature modèle générée par le modèle de signature de l'annexe 3, c'est-à-dire celui correspondant au parcours P1. La figure 10 représente également, à gauche, les deux distributions statistiques de la signature caractéristique construite pour la matrice « a » lorsque celle-ci comporte dix lignes et dix colonnes. La valeur numérique au-dessus de la flèche qui pointe de la signature construite vers la signature modèle est la valeur du coefficient calculé de corrélation entre la signature construite et la signature modèle.

Les figures 11 et 12 sont identiques à la figure 10, sauf que la matrice « a » est remplacée par, respectivement, les matrices « b » et « res » du code source 62. Dans ce cas, les matrices « b » et « res » sont des matrices de dix lignes et de dix colonnes.

La figure 11 montre que la signature caractéristique des accès à la matrice « b » présente une très forte corrélation avec la signature modèle générée à partir du modèle de signature de l'annexe 4, c'est-à-dire celui correspondant au parcours particulier P2 d'une matrice.

La figure 12 montre que la signature modèle qui est le plus fortement corrélée avec la signature construite pour la matrice « res » est à nouveau celle générée à partir du modèle de signature de l'annexe 3.

A la fin de l'opération 144, pour chaque structure de données, le module 66 identifie la signature modèle qui correspond le mieux à la signature caractéristique construite pour cette structure de données. Pour cela, le module 66 retient la signature modèle qui présente le plus fort coefficient de corrélation avec la signature construite pour cette structure de données. Par la suite, la signature modèle ainsi identifiée est appelée signature modèle "correspondant à la signature caractéristique construite".

Lors d'une opération 146, pour chaque structure de données, le module 66 sélectionne automatiquement le codage optimisé générique qui est associé, par la base de données 74, au modèle de signature utilisé pour générer la signature modèle correspondant à la signature caractéristique construite. Ainsi, au vu des résultats illustrés sur les figures 10 à 12, le module 66 sélectionne les codages optimisés de l'annexe 7 pour les matrices « a » et « res » et les codages optimisés de l'annexe 8 pour la matrice « b ».

Le codage optimisé sélectionné pour l'instruction "MALLOC_ALLOCATE" définit selon quel agencement optimisé la structure de données doit être enregistrée dans la mémoire 6. Ce codage optimisé définit aussi le nombre NbS de subdivisions de la structure de données pour chaque taille possible de cette structure de données.

Par la suite, le nombre NbS0 désigne le nombre de subdivisions de la structure de données tel qu'il est déterminé par application de la fonction fCut(), définie dans le codage optimisé de l'instruction "MALLOC_ALLOCATE" sélectionné, et lorsque la taille de cette structure de données est égale à la taille DimO acquise lors de l'opération 114.

Ensuite, lors d'une opération 148, pour chaque structure de données, le module 72 construit une table d'indirection Tdl0 respective qui, à chacune des NbS0 subdivisions, associe un poids optimisés $w_{S,NbS0}(k)$.

Dans ce mode de réalisation, le poids $w_{S,NbS0}(k)$ est calculé à partir du motif d'accès relevé lors de l'opération 118 pour cette structure de données. Pour cela, le module 72 commence par déterminer le nombre NbS0 de subdivisions de la matrice à l'aide de la fonction fCut() contenue dans le codage optimisé de l'instruction "MATRIX_ALLOCATE" sélectionnée lors de l'opération 146.

Ensuite, le module 72 calcule NbS0 poids optimisés $w_{S,NbS0}(k)$ pour cette structure de données de taille DimO. Pour cela, chaque poids $w_{S,NbS0}(k)$ est déterminé en mettant en œuvre la relation (1) précédemment présentée. Ici, la fonction F() de la relation (1) est implémentée sous la forme d'une procédure d'affectation de poids en trois étapes :

- Étape 148.1) : Calcul d'un coefficient $C(D_{k,n})$ pour chaque donnée $D_{k,n}$ de la structure de données S,
- Étape 148.2) : Calcul d'un poids intermédiaire $wi_{S,NbS0}(D_{k,n})$ pour chaque donnée $D_{k,n}$ de la structure de données S,
- Étape 148.3) : Calcul du poids $w_{S,NbS0}(k)$ pour chaque subdivision k de la structure de données S.

Lors de l'étape 148.1, le module 72 calcule pour chaque donnée $D_{k,n}$ un coefficient $C(D_{k,n})$ représentatif de l'intérêt d'enregistrer cette donnée $D_{k,n}$ dans la mémoire 34. Ici, plus la valeur du coefficient $C(D_{k,n})$ est grande, plus le gain de vitesse d'exécution du programme d'ordinateur attendu en plaçant la donnée $D_{k,n}$ dans la mémoire 34 est important. Pour cela, dans ce mode de réalisation, la valeur du coefficient $C(D_{k,n})$ croît en fonction d'une grandeur $Av(D_{k,n})$ et décroît en fonction d'une grandeur $Occ(D_{k,n})$. Les grandeurs $Av(D_{k,n})$ et $Occ(D_{k,n})$, précédemment définies, sont calculées à partir du motif d'accès relevé lors de l'opération 118 pour cette structure de données.

Pour cela, ici, le module 72 commence par combiner les deux motifs d'accès relevés pour chaque indice de la structure de données pour ne former qu'un seul motif d'accès complet comportant, pour chaque donnée accédée, son identifiant de position complet. Par exemple, dans le cas de la matrice "a", le module 72 combine les motifs d'accès $MA_{xa}$ et $MA_{ya}$, pour obtenir le motif d'accès complet $\{(x_{a,1}, y_{a,1}) ; (x_{a,2}, Y_{a,2}); ... ;(x_{a,t-1}, Y_{a,t-1}); (x_{a,t}, y_{a,t});... ; (X_{a,max}, Y_{a,max})\}$, où $(x_{a,t}, y_{a,t})$ est l'identifiant de la position de la donnée de la matrice "a" accédée à l'instant t.

Ensuite, pour calculer la grandeur $Occ(D_{k,n})$, le module 72 compte le nombre de fois où l'identifiant de position, correspondant à la donnée $D_{k,n}$, apparaît dans le motif d'accès complet relevé. Ce nombre est égal à la valeur de la grandeur $Occ(D_{k,n})$, c'est-à-dire au nombre de fois où la donnée $D_{k,n}$ a été accédée lors de l'exécution du code 76 et lorsque la dimension acquise pour cette structure de données est égale à DimO.

Le module 72 compte aussi dans le motif d'accès complet relevé, entre chaque paire "i" d'identifiants de position consécutifs de la donnée $D_{k,n}$, le nombre $Na_i$ d'identifiants de position différents de celui correspondant à la donnée $D_{k,n}$. Ce nombre $Na_i$ est donc égal au nombre de données, autre que la donnée $D_{k,n}$, accédées entre deux accès consécutifs à la donnée $D_{k,n}$. Le cumul de ces nombres $Na_i$ divisé par le nombre d'intervalles entre les identifiants de la position de la donnée $D_{k,n}$ donne la valeur de la grandeur physique $Av(D_{k,n})$. Ce nombre d'intervalles entre deux données $D_{k,n}$ accédées consécutivement, est égal à $Occ(D_{k,n}) - 1$.

Ici, le coefficient $C(D_{k,n})$ est défini par la relation suivante : $C(D_{k,n}) = Av(D_{k,n})/Occ(D_{k,n})$. Lorsque la grandeur $Occ(D_{k,n})$ est nulle ou égale à un, le coefficient $C(D_{k,n})$ est égal à zéro.

De préférence, pour accélérer le calcul du coefficient $C(D_{k,n})$, celui est calculé à l'aide de la relation suivante :

$$C(D_i) = \frac{1}{\sum_{j=0}^{N-1} s_i(j)} \times \frac{\sum_{j=0}^{Occ(i)} \sum_{k=0}^{N-1} Dirac\left(\sum_{l=0}^{N-1} s_i(l) - j\right)}{\sum_{j=0}^{N-1} s_i(j) - 1}$$

où :

- $D_i$ est la donnée située à l'adresse $@_i$ dans la structure de données S,
- $Occ(i)$ est le nombre d'accès à l'adresse $@_i$ et donc à la donnée $D_i$,
- N est le nombre total d'accès à la structure de données S,
- $Si()$ est une fonction de similitude tel que $s_i(j) = 1$, si le i-ième adresse accédée est la même que la j-ième adresse accédée dans le motif d'accès relevé,
- $Dirac()$ est la fonction de Dirac discrète.

Plus précisément, la fonction de similitude $s_i()$ est définie par la relation suivante :

$$\forall i \in [0, N-1], s_i : \begin{pmatrix} [[0, N-1]] \rightarrow \{0,1\} \\ j \rightarrow \begin{pmatrix} 1 \text{ if } @_i = @_j \\ 0 \text{ otherwise} \end{pmatrix} \end{pmatrix}$$

où :

- $@_i$ et $@_j$ sont, respectivement, la i-ième adresse et la j-ième adresse accédées,
- le terme "if" correspond au terme "si" en français,
- le terme "otherwise" correspond au terme "sinon" en français.

La fonction DiracQ est définie par la relation suivante :

$$\begin{pmatrix} \mathbb{Z} \rightarrow \{0,1\} \\ j \rightarrow \begin{pmatrix} 1 \text{ if } j=0 \\ 0 \text{ ohterwise} \end{pmatrix} \end{pmatrix}$$

où les termes "if" et "otherwise" ont le même sens que dans la relation précédente.

Ensuite, lors de l'étape 148.2, le module 72 affecte à chaque donnée $D_{k,n}$ un poids intermédiaire $wi_{S,NdS0}(D_{k,n})$ dont la valeur est d'autant plus grande que le coefficient $C(D_{k,n})$ est grand.

De plus, ici, la valeur de chaque poids intermédiaire $wi_{S,NdS0}(D_{k,n})$ est choisie comme étant un multiple entier d'un paramètre So. Le paramètre So est choisi pour optimiser et accélérer le transfert de données entre les mémoires 6 et 34. Par exemple, puisque le bus 28 permet de transférer simultanément quatre données entre les mémoires 6 et 34, le paramètre So est pris égal à quatre, c'est-à-dire égal au nombre de données simultanément transférables entre les mémoires 6 et 34. Pour cela, les valeurs de chaque poids intermédiaire $wi_{S,NdSO}(D_{k,n})$ sont toutes choisies dans un groupe $G_w$ constitué des valeurs {0 ; So ; 2So ;... ; (w-l)So ; wSo ; ...; $w_{max}$So}, où w est un nombre entier variant de 0 à $w_{max}$. Ici, $w_{max}$ est choisi égal à la partie entière du ratio M/($\mu$So) où :

- M est le nombre maximal de données qui peut être enregistré simultanément dans la mémoire 34, et
- $\mu$ est un nombre supérieur à un et, typiquement, supérieur ou égal à deux, cinq ou dix.

Ainsi, la valeur $w_{max}$So est systématiquement plus petite que la taille de la mémoire 34 et typiquement au moins deux fois inférieure à la taille de la mémoire 34 exprimée en nombre de données simultanément enregistrables dans cette mémoire 34.

Pour arriver à cela, ici, le module 72 regroupe les données $D_{k,n}$ par classes de coefficients $C(D_{k,n})$. Chaque classe regroupe entre elles les données $D_{k,n}$ associées à des coefficients $C(D_{k,n})$ proches les uns des autres. Ainsi, les coefficients $C(D_{k,n})$ des données $D_{k,n}$ qui appartiennent à une même classe sont plus proches de la valeur médiane des coefficients $C(D_{k,n})$ de cette classe que des valeurs médianes des autres classes. Pour cela, ici, la distance moyenne entre les coefficients $C(D_{k,n})$ d'une première classe et les coefficients $C(D_{k,n})$ des classes immédiatement adjacentes est supérieure à l'écart type des coefficients $C(D_{k,n})$ regroupés dans cette première classe. De préférence, l'algorithme de regroupement mis en œuvre pour regrouper les données $D_{k,n}$ de la structure de données en différentes classes en fonction de la valeur de leurs coefficients $C(D_{k,n})$ est l'algorithme connu sous l'acronyme AMSC (« *Agglomerative Mean-Shift Clustering* »). Cet algorithme AMSC est par exemple décrit dans l'article suivant : Xiao-Tong Yuan, Bao-Gang Hu, and Ran He. : "Agglomerative mean-shift clustering", IEEE Transactions on Knowledge and Data Engineering 24, 2 (2010), 209-219.

Cet algorithme AMSC présente plusieurs avantages. Le nombre de classes à utiliser est déterminé par l'algorithme lui-même et non pas fixé à l'avance. Cela évite d'avoir à fixer de façon arbitraire le nombre de classes à utiliser. Seul le nombre maximum de classes est fixé à l'avance. De plus, cet algorithme AMSC peut être paramétré pour fixer le nombre maximum de données $D_{k,n}$ qui peuvent être regroupées dans une même classe. Grâce à cela, l'usage de la mémoire 34 est réservé aux données $D_{k,n}$ qui vont permettre d'obtenir une amélioration substantielle de la vitesse d'exécution du programme d'ordinateur par le calculateur 4.

Ensuite, les classes sont ordonnées par ordre croissant de leur valeur médiane des coefficients $C(D_{k,n})$ qu'elles regroupent.

Le module 72 affecte alors la plus petite valeur du groupe $G_w$ aux données contenues dans la première classe, puis affecte la plus petite valeur restante contenue dans le groupe $G_w$ aux données $D_{k,n}$ de la deuxième classe et ainsi de suite jusqu'à la dernière classe.

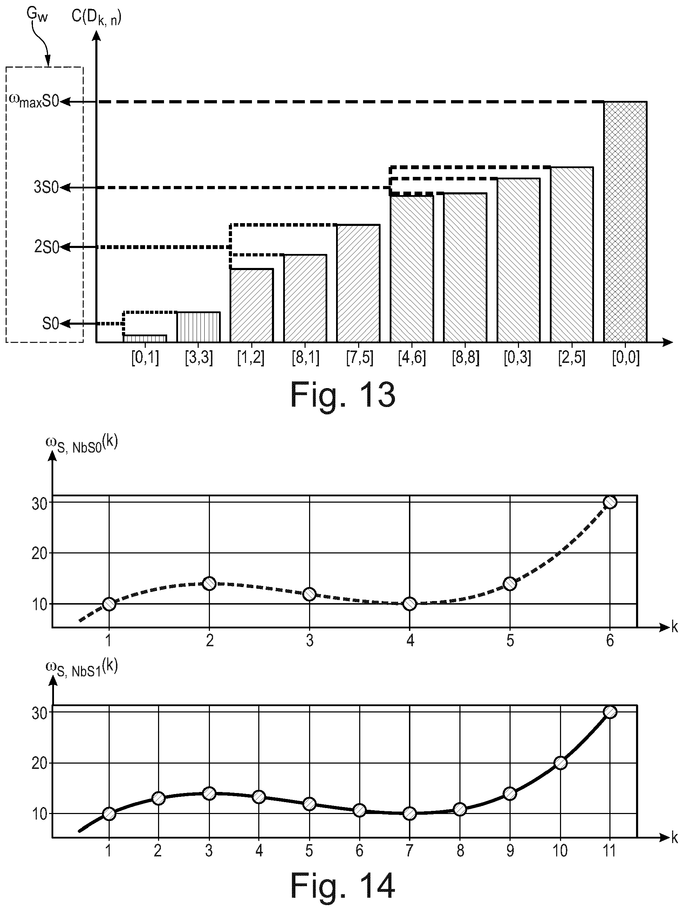

Le fonctionnement de l'étape 148.2 est schématiquement illustré sur le graphique de la figure 13 pour les données $D_{k,n}$ associées à un coefficient $C(D_{k,n})$ non-nul. Les données $D_{k,n}$ dont le coefficient $C(D_{k,n})$ est nul sont systématiquement associée à un poids intermédiaire nul. Sur ce graphique, l'axe des abscisses représente l'identifiant de position de chaque donnée $D_{k,n}$. Ici, l'identifiant de position est le numéro de ligne et le numéro de colonne entre crochets de chaque donnée $D_{k,n}$. L'axe des ordonnées représente la valeur du coefficient $C(D_{k,n})$ calculée pour chaque donnée $D_{k,n}$. Sur ce graphe, les données sont ordonnées par ordre croissant de coefficient $C(D_{k,n})$. Les flèches horizontales pointent vers la valeur du groupe $G_w$ auquel a été associée la donnée $D_{k,n}$. Ainsi, plusieurs données $D_{k,n}$ associées par une flèche horizontale à la même valeur du poids intermédiaire $wi_{S,NdS0}(k)$ appartiennent à la même classe. Par exemple, sur la figure 13, les données $D_{k,n}$ de coordonnées [0 ; 1] et [3 ; 3] appartiennent à la même classe et sont toutes les deux associées à la même valeur So du poids intermédiaire.

Enfin, lors de l'étape 148.3 pour chaque subdivision k de la structure de données, le module 72 calcule le poids $w_{S,NbSO}(k)$ associé à cette subdivision k. Pour cela, par exemple, le module 72 calcule d'abord un poids intermédiaire moyen pour la subdivision k en calculant la moyenne arithmétique des poids intermédiaires $wi_{S,NbS0}(D_{k,n})$ de chacune des données $D_{k,n}$ appartenant à cette subdivision k. Le poids $w_{S,NbS0}(k)$ associé à la subdivision k est ensuite pris égal à la valeur contenue dans le groupe $G_w$ qui est la plus proche de ce poids intermédiaire moyen. Ainsi, la valeur de chacun des poids $w_{S,NbS0}(k)$ appartient elle aussi au groupe $G_w$.

A l'issue de l'étape 148.3, le module 72 a donc calculé un poids optimisé $w_{S,NbS0}(k)$ pour chacune des NbS0 subdivisions de la structure de données. La valeur de ce poids $w_{S,NbS0}(k)$ dépend du numéro d'ordre k.

Dans la table d'indirection Tdl0, ce poids $w_{S,NbS0}(k)$ est associé à la plage d'adresses virtuelles contiguës correspondant à la subdivision k.

Dans le cas où lors d'une exécution ultérieure du programme d'ordinateur, la taille acquise pour la structure de données est différente de celle acquise lors de l'étape 114, le nombre de subdivisions de la structure de données est généralement différent de NbS0. Par la suite, ce nombre différent de subdivisions est noté "NbSl" et correspond à une taille Diml de la structure de données. La taille Dim1 est différente de la taille DimO. Par conséquent, il est nécessaire d'affecter à chacune de ces NbS1 subdivisions un poids optimisé $w_{S,NbS1}(k)$, où k varie cette fois-ci de 1 à NbS1.

Pour accélérer les exécutions ultérieures du programme d'ordinateur avec des tailles différentes pour la structure de données, il est implémenté ici une méthode plus rapide que celle consistant à exécuter à nouveau :

- l'étape 112 en choisissant cette fois-ci la taille DimI pour la structure de données, puis
- l'étape 148 en utilisant le motif d'accès relevé lors de la nouvelle exécution de l'étape 112.

Pour cela, lors d'une opération 150, le module 72 construit une fonction numérique $P_s(x)$ permettant de calculer les poids optimisés pour un nombre quelconque de subdivisions de la structure de données S. La fonction $P_s(x)$ est continue sur l'intervalle [1 ; NbS0] et passe par chacun des points de coordonnées [k ; $w_{S,NbS0}(k)$], où $w_{S,NbS0}(k)$ est le poids déterminé lors de l'étape 148. Il est souligné que lorsque k désigne une subdivision de la structure de donnée de taille DimO, k est une nombre entier qui varie entre 1 et NbS0. Lorsque k désigne une subdivision de la structure de données de taille DimI, k est un nombre entier qui varie entre 1 et NbS1. Dans ce texte, à chaque fois que l'indice k est employé, à partir du contexte, il est simple de savoir si l'indice k désigne une subdivision d'une structure de données de taille DimO ou DimI ou autre. Ainsi, par la suite, la même notation "k" est utilisée pour désigner l'identifiant d'une subdivision d'une structure de données de taille quelconque.

Ici, la fonction $P_s(x)$ est définie sur chaque intervalle [k ; k+1] par un polynôme d'ordre trois noté $P_{S,k}(x)$. Ainsi, il existe 4(NbS0-1) variables à déterminer pour construire la fonction $P_s(x)$ continue sur l'intervalle [1 ; NbS0]. Pour obtenir suffisamment d'équations afin de calculer les valeurs de ces variables, les conditions suivantes sont imposées :

- Condition (1) : au niveau de chaque point [k ; $w_{S,NbS0}(k)$], les relations suivantes sont vérifiées $P_{S,k}(k) = w_{S,NbS0}(k)$ et $P_{S,k}(k+1) = w_{S,NbS0}(k+1)$.
- Condition (2) : pour k compris entre 2 et NbS0-1, au niveau de chaque point [k ; $w_{S,NbS0}(k)$], la relation suivante est vérifiée : $d(P_{S,k-1}(k)/dx = d(P_{S,k}(k)/dx$, où le symbole "d/dx" désigne la dérivée première par rapport à la variable x. Autrement dit, les dérivées premières des polynômes $P_{S,k-1}(x)$ et $P_{S,k}(x)$ sont égales au niveau de ces points [k ; $w_{S,NbS0}(k)$].
- Condition (3) : pour k compris entre 2 et NbS0-1, au niveau de chaque point [k ; $w_{S,NbS0}(k)$], la relation suivante est vérifiée : $d^2P_{S,k-1}(k)/dx^2 = d^2P_{S,k}(k)/dx^2$, où le symbole "$d^2/dx^2$" désigne la dérivée seconde par rapport à la variable x. Autrement dit, les dérivées secondes des polynômes $P_{s,k-1}(x)$ et $P_{S,k}(x)$ sont égales au niveau de ces points [k ; $w_{S,NbS0}(k)$].
- Condition (4) : pour k compris entre 2 et NbS0-1, lorsque le point [k ; $w_{S,NbS0}(k)$] est un extremum local, la relation suivante est vérifiée : $d(P_{S,k-1}(k))/dx = d(P_{S,k}(k))/dx = 0$. Autrement dit, les dérivées premières des polynômes $P_{S,k-1}(x)$ et $P_{S,k}(x)$ sont nulles au niveau du point [k ; $w_{S,NbS0}(k)$]. Le point [k ; $w_{S,NbS0}(k)$] est un extremum local s'il vérifie l'une des deux conditions suivantes :

  - $W_{S,NbS0}(k) > W_{S,NbS0}(k-1)$ et $W_{S,NbS0}(k) > W_{S,NbS0}(k+1)$, ou
  - $W_{S,NbS0}(k) < W_{S,NbS0}(k-1)$ et $W_{S,NbS0}(k) < W_{S,NbS0}(k+1)$.

Les conditions (1) à (3) forment 4NbS0-6 équations.

La condition (4) se substitue à la condition (2) lorsque le point [k ; $w_{S,NbS0}(k)$] est un extremum local. Ainsi, la condition (4) permet d'introduire deux équations dans le système d'équations à résoudre au lieu d'une seule lorsque le point n'est pas un extremum local. La condition (4) permet donc d'obtenir entre 0 et (NbS0-2)/2 équations supplémentaires. Si la condition (4) fournit plus de deux équations supplémentaires, alors seules deux de ces équations supplémentaires sont sélectionnées pour obtenir un nombre total d'équations égal à 4NbS0-4. Par exemple, pour cela, chaque paire possible d'équations supplémentaires est testée afin de sélectionner celle qui donne le meilleur résultat. Autrement dit, pour chaque paire d'équations supplémentaires, la fonction $P_s(x)$ est construite, puis la suite du procédé est exécutée jusqu'à obtenir un code exécutable optimisé 78. Les performances du calculateur 4 sont alors mesurées lorsqu'il exécute ce code exécutable. La paire d'équations supplémentaires sélectionnées est celle qui permet d'obtenir la meilleure performance, c'est-à-dire ici la vitesse d'exécution la plus rapide.

A l'inverse, si le nombre d'équations supplémentaires introduites par la condition (4) est insuffisant, alors des conditions supplémentaires sur les extrémités de la fonction $P_s(x)$ sont posées. Par exemple, une ou les deux conditions supplémentaires suivantes sont utilisées :

- Condition (5) : au niveau du points [1 ; $w_{S,NbS0}(1)$], la relation suivante est vérifiée : $d^2P_{S,NbS0}(1)/dx^2 = 0$. Autrement dit, la dérivée seconde de la fonction $P_s(x)$ est nulle pour x = 1.
- Condition (6) : au niveau du point [NbS0 ; $w_{S,NbS0}(NbS0)$], la relation suivante est vérifiée : $d^2P_{S,NbS0}(NbS0)/dx^2 = 0$. Autrement dit, la dérivée seconde de la fonction Ps(x) est nulle pour x = NbS0.

Ainsi, avec les conditions ci-dessus, quelle que soit la situation, le module 72 peut au moins obtenir autant d'équations qu'il y a de variables à déterminer.

Le module 72 résout le système d'équations obtenu à partir des conditions (1) à (6). A l'issue de l'opération 150, les équations des NbS0-1 polynômes $P_{s,k}(x)$, ainsi déterminées, forment la fonction $P_s(x)$ continue sur l'intervalle [1 ; NbS0]. Pour chaque valeur entière de la variable x, c'est-à-dire lorsque la variable x est égale à k, la fonction $P_s(x)$ renvoie la valeur qui est égale au poids $w_{S,NbS0}(k)$ associée à la subdivision k lorsque la taille de la structure de données est égale à DimO.

Lors de l'opération 152, le module 72 construit la procédure fTdl(NbS) qui reçoit en entrée le nombre NbS de subdivisions et qui fournit, en sortie, pour chacune de ces NbS subdivisions, la valeur du poids $w_{S,NbS}(k)$ associée à cette subdivision. Ici, la procédure fTdl() génère pour cela, en sortie, lorsqu'elle est exécutée par le calculateur 4, une table d'indirection Tdl. La table Tdl associe à chaque subdivision k de la structure de données le poids optimisé $w_{S,NbS}(k)$ de la subdivision k. De plus, ici, la table d'indirection générée associe également à chacune des subdivisions k son propre champ "statut" qui permet de déterminer comment les données $D_{k,n}$ de cette subdivision k sont accédées et transférées dans la mémoire 34.

Ici, la procédure fTdl(NbS) calcule chaque poids optimisé $w_{S,NbS}(k)$ pour chacune des NbS subdivisions de la structure de données S à l'aide de la relation suivante : $w_{S,NbS}(k) = P_S(1+(k-1)(NbS0-1)/(NbS-1))$, où k est le numéro d'ordre de la subdivision et varie ici de 1 à NbS et la fonction $P_S()$ est la fonction construite lors de l'opération 150.

Autrement dit, le poids optimisé $w_{S,NbS}(k)$ est calculé par interpolation à partir des poids ws,Nbso(k) et non pas en exécutant à nouveau l'étape 112 et l'opération 148 pour le nombre NbS de subdivisions de la structure de données S.

Ceci est illustré schématiquement sur la figure 14. Le graphe du haut représente un exemple très simplifié de la fonction $P_s(x)$ construite lors de l'opération 150 et dans le cas particulier où le nombre NbS0 est égal à six. L'axe des abscisses représente la valeur de l'indice k identifiant la subdivision. L'axe des ordonnées représente la valeur du poids $w_{S,NbS0}(k)$ associée à chaque indice k.

Le graphe du bas est identique au graphe du haut, sauf qu'il représente les poids $w_{S,NbS}(k)$, calculés à l'aide de la fonction $P_S(x)$, dans le cas où le nombre NbS de subdivisions est égal à onze. Comme le montre la comparaison des graphes du haut et du bas de la figure 14, la procédure fTdl() étire la courbe du graphe du haut définie seulement sur l'intervalle [1 ; NbS0] pour obtenir une courbe identique, mais qui s'étend sur l'intervalle [1 ; NbS].

La procédure fTdl() construite génère, lorsqu'elle est exécutée par le calculateur 4, la table d'indirection Tdl. Lors de la création de cette table d'indirection, les informations contenues dans le champ "statut" sont initialisées pour indiquer que :

- aucune des données $D_{k,n}$ de la structure de données S n'a pas été modifiée, et
- aucune des données $D_{k,n}$ de la structure de données S n'est présente dans la mémoire 34 à ce stade.

Le code, ici en langage C++, de la procédure fTdl() est ensuite intégré dans le codage optimisé de l'instruction « MATRIX_ALLOCATE » représenté dans l'annexe 7.

Ainsi, à chaque fois qu'un espace mémoire est dynamiquement alloué pour une nouvelle structure de données S, l'agencement optimisé de cette structure de données est utilisé et défini par la procédure fCut() et la table d'indirection Tdl correspondant à la taille de cette structure de données est dynamiquement générée.

Enfin, lors d'une opération 154, le module 66 remplace chaque instruction spécifique qui manipule une structure de données particulière dans le code source 62 par le codage optimisé correspondant en langage C++. Le codage optimisé correspondant est généré à partir du codage optimisé générique associé à cette instruction spécifique par la table de conversion sélectionnée pour cette structure de données lors de l'opération 146. Plus précisément, le codage optimisé correspondant en langage C++ est obtenu en remplaçant les différents paramètres du codage optimisé générique par les valeurs des paramètres de l'instruction spécifique.

Par exemple, l'instruction spécifique « MATRIX_ALLOCATE (TYPE, N0, N1, a) » de la ligne 17 du code source 62 comporte les valeurs suivantes « TYPE », « N0 », « N1 » et « a » des paramètres « TYPE », « NBL », « NBC », « NAME » du codage optimisé générique associé à cette instruction spécifique par la table de conversion de l'annexe 7. Dès lors, après remplacement des paramètres du codage optimisé générique par ces valeurs, le module 66 obtient le codage optimisé correspondant en langage C++. En faisant de même pour l'instruction spécifique de la ligne 21 du code source 62 et en utilisant cette fois-ci la table de conversion de l'annexe 8, le module 66 obtient un codage optimisé correspondant en langage C++.

Ainsi, à la fin de l'opération 154, le module 66 obtient un code source optimisé dans lequel le codage des structures de données est optimisé pour utiliser la mémoire 34.

Ensuite, lors d'une étape 160, le module 66 compile ce code source optimisé pour le calculateur cible 4. Cette étape est, par exemple, réalisée de façon conventionnelle. À l'issue de l'étape 160, le code exécutable 78 optimisé a été généré.

Lors d'une étape 162, le code exécutable 78 est fourni et chargé dans la mémoire 8 de l'unité 2 de calcul et devient le code exécutable 12, exécuté par le calculateur 4.

Lors d'une étape 164, le calculateur 4 exécute le code exécutable 12 généré par le compilateur 40.

Lors de l'exécution du code 78, le calculateur 4 exécute notamment les opérations suivantes pour chacune des structures de données dont les tailles sont définies dynamiquement au cours de l'exécution du code 78. Par la suite, ces opérations sont décrites dans le cas particulier de la matrice "a". Toutefois, tout ce qui est décrit dans ce cas particulier, se transpose sans difficulté au cas des autres matrices "b" et "res".

Lors d'une opération 170, le calculateur 4 acquière la taille de la matrice "a".

Puis, lors d'une opération 172, le calculateur alloue dynamiquement un espace, dans la mémoire 6, pour y stocker la matrice "a". Lors de cette opération, le calculateur exécute la procédure fCut(INT, N0, N1, "a"). Ainsi, lors de cette opération, le calculateur 4 divise la plage d'adresses, allouée au stockage de la matrice "a" dans la mémoire 6, en NbS1 subdivisions et agence ces subdivisions les unes par rapport aux autres à l'intérieur de cette plage d'adresses. A l'issu de l'exécution de la procédure fCut(), le nombre NbSa de subdivisions de la matrice "a" est donc connu.

Ensuite, lors d'une opération 174, le calculateur exécute la procédure fTdl(NbSa). A l'issue de l'exécution de la procédure fTdl(NbSa), la table d'indirection Tdla qui à chaque subdivision k associe le poids $w_{a,NbSa}(k)$ et le champ "statut" est créée et initialisée.

Ensuite, les opérations d'accès à la matrice "a" sont exécutées. Dans ce cas particulier, il s'agit seulement d'opération de lecture des données de la matrice "a". Ainsi, dans ce cas particulier, lors d'une opération 176, à chaque fois qu'une donnée a[k,j] située à l'intersection de la colonne k et de la ligne j de la matrice "a" doit être lue, la fonction fGet("a", k, j) est exécutée. Dans le cas où la donnée a[k,j] est contenue dans une subdivision k dont le poids $w_{a,Nbsa}(k)$ est supérieur à un et qui n'est pas déjà dans la mémoire 34, cela provoque l'exécution de la procédure fLoad("a", k, j). Par conséquent, la donnée a[k,j] est transférée dans la mémoire 34 puis lue à partir de la mémoire 34. Ensuite, lors des prochaines exécutions de la procédure fGet("a", k, j), la donnée a[k,j] est directement lue à partir de la mémoire 34.

Différents essais ont été réalisés pour vérifier que le code exécutable 78 généré par le compilateur 40 permettait effectivement d'améliorer les performances du calculateur 4 lorsque celui-ci exécute ce code exécutable 78. Il a été observé que le code 78 s'exécute au moins deux fois, et le plus souvent dix fois ou cinquante fois, plus rapidement qu'un programme d'ordinateur identique mais qui n'utilise pas la mémoire 34. De plus, il a pu être observé que la performance du calculateur 4 ne varie pratiquement pas quand les tailles des matrices "a", "b" et "res" sont modifiées à chaque exécution du code 78. Par exemple, il a été observé que le ratio, égal au temps d'exécution du code 78 par le calculateur 4 divisé par les tailles des matrices "a", "b" et "res", est pratiquement constant pour un très grand nombre de tailles différentes de ces matrices.

D'autres essais avec d'autres codes sources implémentant d'autres traitements informatiques qui manipulent des matrices ont été réalisés. Il a pu être observé que pour ces autres traitement aussi, le ratio, égal à la vitesse d'exécution du code 78 par le calculateur divisé par les tailles des matrices traitées, ne variait pratiquement pas en fonction de la taille des matrices traitées.

Chapitre II : Variantes

Variantes du calculateur 4 :

Jusqu'à présent, le mode de réalisation du compilateur 40 a été illustré dans le cas particulier où la mémoire secondaire est une mémoire "Scratchpad". Toutefois, ce qui a été précédemment décrit, s'applique à tout type de mémoire secondaire. Par exemple, la mémoire secondaire peut être un système de calcul en mémoire (« In-Memory Computing System » en anglais) tel que celui décrit dans l'article suivant : Maha Kooli et AL :"Smart instruction codes for in-memory computing architectures compatible with standard sram interfaces", 2018 Design, Automation & Test in Europe Conférence & Exhibition (DATE), pages 1634-1639. IEEE, 2018. Un tel système de calcul en mémoire est par exemple connu sous l'acronyme "C-SRAM". Dans ce cas, le codage optimisé de la structure de données permet d'enregistrer des données de cette structure de données dans ce système de calcul en mémoire et donc de profiter des calculs fait par ce système. En effet, des opérations de calcul entre deux des données enregistrées dans une C-SRAM peuvent être exécutées plus rapidement par la C-SRAM que si ces mêmes opérations étaient réalisées de façon conventionnelle par le microprocesseur. Dans un premier mode de réalisation, le procédé de compilation décrit précédemment est appliqué à l'identique au cas d'un calculateur comportant une C-SRAM à la place de la mémoire 34.

Dans un mode de réalisation amélioré pour les C-SRAM, le coefficient $C(D_{k,n})$, qui représente l'intérêt d'enregistrer une donnée $D_{k,n}$ dans la mémoire secondaire, est adapté au cas des C-SRAM. Par exemple, en variante, le coefficient $C(D_{k,n})$ est calculé de manière à ce que sa valeur augmente en fonction de l'alignement de la donnée $D_{k,n}$ par rapport aux données adjacentes de la subdivision k. En effet, pour réaliser efficacement des calculs en mémoire, les données à combiner entre elles doivent être situées aux mêmes endroits dans chacune des lignes de la mémoire à combiner. Si ce n'est pas le cas, avant de pouvoir faire un calcul en mémoire entre ces deux données, au moins l'une d'entre elle doit être déplacée pour l'aligner avec l'autre donnée. Plus le nombre de déplacement de données à réaliser avant de réaliser un calcul en mémoire est petit, plus le calcul réalisé par la mémoire est exécuté rapidement. Ainsi, à titre d'illustration, dans le cas d'une C-SRAM, le coefficient $C(D_{k,n})$ peut être calculé à l'aide de la relation suivante : $C(D_{k,n}) = Av(D_{k,n})/(L(D_{k,n})Occ(D_{k,n}))$, où :

- les grandeurs $Av(D_{k,n})$ et $Occ(D_{k,n})$ sont les mêmes grandeurs que celles précédemment définies,
- la grandeur $L(D_{k,n})$ est définie par la relation suivante : $L(D_{k,n}) = f_c(@_{k,n}) - f_c(@_{k,n-1})$, où :

  - $@_{k,n}$ et $@_{k,n-1}$ sont les adresses virtuelles, dans la mémoire 6, respectivement, des données $D_{k,n}$ et $D_{k,n-1}$ de la structure de données accédée,
  - $f_c(@_{k,n})$ est l'opération suivante : $f_c(@_{k,n}) = @_{k,n}$ mod L, où :

    - L est la longueur, en nombre de bits, de chaque ligne de la C-SRAM,
    - « mod » désigne l'opération modulo, ainsi, le terme $@_{k,n}$ mod L est égal au reste de la division euclidienne de l'adresse $@_{k,n}$ par la longueur L.

Le terme $@_{k,n}$ mod L est représentatif de la distance qui sépare la donnée $D_{k,n}$ correspondant à cette adresse $@_{k,n}$ du début de la ligne de la C-SRAM. La différence entre les termes $f_c(@_{k,n})$ et $f_c(@_{k,n-1})$ est donc représentative de l'alignement de la donnée $D_{k,n}$ par rapport à la donnée $D_{k,n-1}$. Par conséquent, le nombre de décalages à exécuter pour aligner ces deux données est proportionnel à cette différence $L(D_{k,n})$. Si la différence entre les termes $f_c(@_{k,n})$ et $f_c(@_{k,n-i})$ est nulle, la grandeur $L(D_{k,n})$ est prise égale à 0,5.

Lorsque la mémoire secondaire n'est pas une mémoire à laquelle il est possible d'accéder plus rapidement qu'à la mémoire 22, alors le coefficient $C(D_{k,n})$ ne dépend pas forcément des grandeurs $Av(D_{k,n})$ et $Occ(D_{k,n})$. Par exemple, dans le cas où la mémoire secondaire est une C-SRAM, le coefficient $C(D_{k,n})$ peut simplement être calculé à l'aide de la relation suivante : $C(D_{k,n}) = L(D_{k,n})$.

Dans un autre mode de réalisation, la mémoire secondaire est non pas une mémoire plus rapide mais une mémoire qui consomme moins d'énergie par exemple. Dans ce cas, typiquement, la performance du calculateur cible qui est optimisée est la consommation d'énergie.

Variantes du module 64 de compilation :

En variante, le code source original n'est pas écrit dans le langage V0, mais, par exemple, dans un langage conventionnel de programmation comme le langage C++ ou le langage C. Dans ce cas, selon un premier mode de réalisation, le module 64 de compilation est modifié pour exécuter, avant l'opération 108, une opération de spécialisation du code source original fourni. Lors de cette opération de spécialisation, le module 64 de compilation analyse le code source et y introduit automatiquement les instructions spécifiques nécessaires pour la mise en œuvre des procédés décrits ici. Par exemple, à cet effet, le module 64 de compilation remplace automatiquement les instructions du langage C++ qui traitent des structures de données par les instructions spécifiques correspondantes du langage V0. En particulier, le module de compilation remplace automatiquement les portions du code source original écrit en langage C++ qui accèdent aux structures de données par les instructions spécifiques correspondantes du langage V0. Ensuite, le reste du procédé de compilation est identique à ce qui a été décrit précédemment.

Selon un second mode de réalisation, le module 64 est modifié pour transformer directement le code source original écrit dans un langage conventionnel en un code source intermédiaire instrumenté. Par exemple, pour cela, le module 64 de compilation analyse le code source original pour identifier les portions de ce code source original qui traitent des structures de données. Ensuite, chaque portion identifiée est automatiquement complétée par le jeu d'instructions d'instrumentation nécessaire pour relever le motif d'accès à ces structures de données. Ensuite, lors de l'étape 140, ce sont ces mêmes portions du code source qui sont chacune remplacées par un codage optimisé en fonction du motif d'accès relevé. Dans ce second mode de réalisation, le langage V0 n'est donc pas utilisé.

Dans un autre mode de réalisation, le module 64 choisit lui-même une taille pour chacune des structures de données dont les tailles sont connues uniquement au cours de l'exécution du programme d'ordinateur. Par exemple, pour la dimension N0 de la matrice "a", le module 64 remplace automatiquement l'instruction "cin » N0" par une instruction "# DEFINE N0 DimN0", où DimN0 est une valeur numérique prédéterminée. Le module fait de même pour chacune des instructions du langage C++ qui permettent d'acquérir les tailles des matrices "a", "b" et "res". Ainsi, lors de l'exécution du code 76, l'utilisateur n'a plus à saisir manuellement ces tailles.

La description précédente a été donnée dans le cas particulier où l'agencement standard des matrices mis en œuvre par le module 64 de compilation est l'agencement en ligne. En variante, l'agencement standard peut-être différent. Par exemple, l'agencement standard peut être considéré comme étant l'agencement en colonne ou en diagonale ou autre.

Variantes du module 66 de compilation :

Dans des modes de réalisation moins perfectionnés, la comparaison réalisée lors de l'opération 144 est réalisée différemment. Par exemple, d'autres coefficients de corrélation peuvent être utilisés. Par exemple, les coefficients de corrélation connus sous les termes anglais « Kendall Tau Rank » ou « Spearman's Rank » peuvent être utilisés.

En variante, lors de la sélection du codage optimisé pour une structure de données, le module 66 de compilation présente au développeur une liste restreinte de codages optimisés possibles. Cette liste restreinte comporte seulement les codages optimisés qui sont associés, par la base de données 74, aux modèles de signature utilisés pour générer les signatures modèles les plus fortement corrélés à la signature construite pour cette structure de données. Par exemple, la liste restreinte comporte seulement les codages optimisés associés aux signatures modèles pour lesquelles le coefficient de corrélation calculé dépasse un seuil prédéterminé. Ensuite, le développeur sélectionne dans cette liste restreinte, le codage optimisé à utiliser pour cette structure de données. Ici, par « liste restreinte d'agencements optimisés », on désigne une liste qui contient un nombre de codages optimisés susceptibles d'être utilisés pour cette structure de données qui est inférieur au nombre total de codages optimisés contenus dans la base 74 et susceptibles d'être utilisés pour cette même structure de données.

Dans le cas où le code source original n'est pas écrit dans le langage V0, mais, par exemple, dans un langage conventionnel de programmation comme le langage C++ ou le langage C, le module 66 de compilation est modifié de façon similaire à ce qui a été décrit, dans le même cas, pour le module 64 de compilation. En particulier, le module 66 est modifié soit pour spécialiser le code source original en utilisant pour cela des instructions du langage V0 soit pour transformer directement le code source original en un code source optimisé. Par exemple, dans ce dernier cas, le module 66 de compilation analyse le code source original pour identifier les portions de ce code source original qui allouent de l'espace mémoire à une structure de données particulière. Ensuite, la portion identifiée est automatiquement remplacée par le codage optimisé sélectionné à partir de la signature des accès à cette structure de données particulière.

Lors de l'opération 150, lorsque le nombre d'équations supplémentaires obtenues à l'aide de la condition (4) est supérieur à deux, d'autres méthodes de sélection sont possibles pour ne retenir que 4(NbS0-1) équations. Par exemple, toutes les équations supplémentaires introduites par la condition (4) sont retenues et des équations introduites par les conditions (2) et (3) sont éliminées pour ramener le nombre d'équations à 4(NbS0-1).

En variantes d'autres conditions que les conditions (1) à (6) précédemment présentées peuvent être utilisées lors de l'opération 150 pour construire la fonction $P_S(x)$.

En variante, les données $D_{k,n}$ enregistrées dans la même subdivision k ne sont pas nécessairement accédées les unes après les autres lors de l'exécution du programme d'ordinateur. Autrement dit, il n'est pas toujours nécessaire de maximiser la localité des données. Dès lors, au moins dans certains cas, la sélection d'un agencement optimisé qui maximise la localité des données peut être omise. Dans ce cas, la construction des signatures puis la sélection d'un codage optimisé parmi plusieurs codages optimisés possibles peuvent être omises. En effet, dans un mode de réalisation extrêmement simple, la base de données 74 ne comporte qu'un seul codage optimisé pour chacune des instructions du langage V0. Par exemple, seuls les codages optimisés de la table de conversion de l'annexe 7 sont utilisés.

Dans une autre variante, la sélection d'un agencement optimisé pour la structure de données est réalisée en utilisant d'autres informations que le motif d'accès relevé. Par exemple, dans un cas simplifié, c'est le développeur qui sélectionne lui-même pour chaque structure de données l'agencement optimisé à utiliser.

Variantes du module 68 de relevé du motif d'accès :

Dans une variante, le module 68 de relevé des accès est implémenté sous la forme d'un module matériel implémenté, par exemple, dans le microprocesseur 56. Dans ce cas, le code exécutable n'a pas besoin d'être instrumenté pour relever les motifs d'accès. Le module matériel de relevé des accès fonctionne comme dans le cas de l'implémentation logicielle précédemment décrite. De plus, de préférence, dans ce cas, chaque donnée enregistrée dans la mémoire 58 comporte, en plus de la donnée elle-même, l'identifiant de la structure de données à laquelle cette donnée appartient. Ainsi, le module matériel peut facilement relever l'identifiant de la structure de données correspondant à la donnée accédée.

En variante, le module 68 de relevé est modifié pour relever uniquement un motif d'accès en lecture et/ou uniquement un motif d'accès en écriture. Un motif d'accès en lecture est un motif d'accès qui comporte uniquement les identifiants de position des données de la structure de données lues pendant l'exécution du code exécutable 76. À l'inverse, un motif d'accès en écriture est un motif d'accès qui comporte uniquement les identifiants de position des données de la structure de données écrites pendant l'exécution du code exécutable 76. Par exemple, pour relever uniquement le motif d'accès en lecture, aucune instruction spécifique n'est utilisé dans le code source pour coder les accès en écriture à la structure de données. Par exemple, les instructions "MATRIX_SET" et "MATRIX_ADD" sont remplacées par des instructions correspondantes conventionnelles du langage C++ dans le code source 62.

En variante, l'identifiant de position relevé est l'adresse virtuelle de la donnée accédée. Dans ce cas, la fonction

$f_{t,m}$ est adaptée en conséquence. Par exemple, la fonction $f_{t,m}$ est appliquée à l'adresse virtuelle relevée et non plus à chacun des indices $x_t$ et $y_t$. Dans d'autres modes de réalisation possibles, l'identifiant de position n'est ni un indice ni l'adresse virtuelle de la donnée accédée. Par exemple, l'identifiant de position relevé est l'adresse physique de la donnée dans la mémoire principale. Ceci est possible, par exemple, lorsque aucun mécanisme de mémoire virtuelle n'est mis en œuvre. En effet, dans une telle situation, la plage d'adresses physiques dans laquelle la structure de données est enregistrée est continue est comporte seulement des données de cette structure de données.

Variantes du module 70 de construction d'une signature :

Dans une variante simplifiée, l'étape 126 de transformation du motif d'accès relevé en motif d'accès transformé est omise. Dans ce cas, la distribution statistique est par exemple directement construite à partir du motif d'accès relevé. Cette variante est préférentiellement combinée avec le cas où l'identifiant de position relevé est un indice utilisé pour repérer la position de la donnée accédée à l'intérieur de la structure de données.

Dans un autre mode de réalisation simplifié, la distribution statistique construite n'est pas normalisée.

D'autres fonctions de transformation que la fonction $f_{t,m}$ peuvent être utilisée en lieu et place de la fonction $f_{t,m}$. En effet, il existe de nombreuses fonctions de transformation qui permettent de construire une signature caractéristique de l'ordre temporelle dans lequel les données de la structure de données sont parcourues. Par exemple, la fonction $f_{t,m}$ peut être remplacée par une fonction $f_{t,m}$ définie par la relation suivant $f_{t,m}(x_t) = |x_t - x_{t-1}|$, où le symbole $|...|$ désigne l'opération valeur absolue.

Selon l'architecture matérielle du calculateur cible, le codage optimisé de la structure de données qui permet d'améliorer la vitesse d'exécution pour un parcours particulier n'est pas forcément le même. En particulier, un codage optimisé peut exister uniquement pour certaines architectures matérielles. Dans ce cas, la fonction $f_{t,m}$ est aussi choisie en fonction de l'architecture matérielle du calculateur cible. À cet effet, le module 70 est capable de sélectionner automatiquement, dans une base de données, une fonction $f_{t,m}$ correspondant à l'identifiant acquis de l'architecture matérielle du calculateur cible. D'autres exemples de fonction $f_{t,m}$ pour d'autres architectures matérielles de calculateurs cibles sont décrits dans le chapitre II de la demande FR1913348 déposée le 27/11/2019.

D'autres méthodes peuvent être utilisées pour construire une signature caractéristique des accès à un structure de données. Un exemple d'une autre méthode utilisable est décrite dans l'article suivant : Z. Xu et al. : "Malware detection using machine learning based analysis of virtual memory access patterns", In DATE, 2017.

Variantes de la base de donnée 74 :

Au lieu de contenir des modèles paramétrés de signatures, la base de données 74 peut directement contenir les signatures modèles. Dans ce cas, typiquement, pour un même parcours particulier, la base de données comporte autant de signatures modèles que de tailles possibles pour la structure de données. Cela augmente la taille de la base de données 74 mais, en contrepartie, cela simplifie l'extraction d'une signature modèle à partir de cette base de données. En effet, il n'est alors plus nécessaire de générer cette signature modèle à partir d'un modèle paramétré de signatures. Dans ce cas, il n'est pas non plus nécessaire que le module 68 relève la taille de la structure de données.

Dans le cas de structures de données autres que des matrices à deux dimensions, des modèles de signature doivent être établis pour chacune de ces structures de données. Pour cela, la même méthodologie que celle décrite dans le cas des matrices à deux dimensions peut être utilisée.

Variantes de la procédure fCut() de découpage :

En variante, les dimensions des différentes subdivisions d'une même structure de données ne sont pas toutes égales.

Dans le cas où la dimension DimS des subdivisions est petite, le poids $w_{S,NbS}(k)$ associé à une subdivision k peut être plus grand que la dimension DimS. Dans ce cas, lors du transfert de données entre les mémoires 6 et 34, les données de la subdivision k ainsi que des données des subdivisions adjacentes à cette subdivision k sont simultanément transférées de la mémoire 6 vers la mémoire 34.

Variante de la procédure fTdI() :

D'autres procédés de calcul des valeurs des poids $w_{S,NbS0}(k)$ sont possibles. Par exemple, d'autres valeurs peuvent être choisies pour les paramètres So et $\mu$.

Il est aussi possible d'utiliser d'autres procédés, que la méthode AMSC, de regroupement des données $D_{k,n}$ dans différentes classes. Dans ce cas, de préférence, cette autre méthode présente des propriétés proches ou identiques à celles de la méthode AMSC.

En variante, la valeur des poids $w_{S,NbS}(k)$ n'est pas nécessairement un multiple entier du paramètre So. Ainsi, le groupe $G_w$ de valeurs dans lequel sont choisies les valeurs des poids $w_{S,NbS}(k)$ peut aussi contenir d'autres valeurs que des multiples entiers du paramètre So. Par exemple, dans un mode de réalisation particulier, le groupe $G_w$ comporte des valeurs entières indépendantes de la valeur du paramètre So. Dans ce dernier cas, les paramètres So et $\mu$ ne sont pas nécessairement utilisés. Dans un autre mode de réalisation, les valeurs contenues dans le groupe $G_w$ ne font pas une suite arithmétique mais, par exemple, une suite géométrique ou autre. Par exemple, le groupe $G_w$ comporte uniquement des multiples pairs du paramètres So.

En variante, les polynômes $P_{S,k}(x)$ définis chacun sur un intervalle respectif [k ; k+1] peuvent être des polynômes d'ordre un ou deux, et non pas nécessairement d'ordre trois. Dans ce cas, au moins certaines des conditions (1) à (6) doivent être allégées pour que le nombre d'équations à résoudre corresponde au nombre de variables à déterminer.

Les valeurs des poids $w_{S,NbS0}(k)$ peuvent être calculées en mettant en œuvre une autre procédure que celles précédemment décrites. En particulier, il n'est pas nécessaire de calculer les valeurs des poids $w_{S,NbS0}(k)$ à partir des coefficients $C(D_{k,n})$ tels que précédemment décrits. En fait, quel que soit le procédé de calcul des valeurs des poids $w_{S,NbS0}(k)$ et donc quelle que soit la valeur des poids $w_{S,NbS0}(k)$, la procédure fTdI() décrite ici peut être mise en œuvre pour calculer la valeur des poids $w_{S,NbS}(k)$ pour d'autres dimensions de la structure de données, sans avoir à réitérer à chaque fois l'exécution des étapes tels que les étapes 112 et 148 pour cette nouvelle taille de la structure de données. En effet, le calcul des poids $w_{S,NbS}(k)$ à l'aide de la fonction $P_S(x)$ s'avère toujours plus rapide et permet d'obtenir des valeurs pour les poids qui permettent, a minima, d'obtenir des performances pratiquement identiques pour le calculateur 4 et pour toute taille possible de la structure de données.

Ainsi, dans un autre mode de réalisation, les poids $w_{S,NbS0}(k)$ sont des valeurs choisies par le développeur. Par exemple, le développeur détermine expérimentalement ces valeurs. Pour cela, le développeur peut procéder comme suit :

- Opération 1) : le développeur choisit un nouveau jeu de valeurs pour chacun des poids $w_{S,NbS0}(k)$.
- Opération 2) : le compilateur génère le code exécutable 78 en utilisant les valeurs choisies lors de l'opération 1) pour les poids $w_{S,NbS0}(k)$.
- Opération 3) : les performances du code 78 généré sont mesurées. Par exemple, la vitesse d'exécution du code 78 est mesurée. Si les performances mesurées sont meilleures que celles obtenues avec le précédent meilleur jeu de valeurs pour les poids $w_{S,NbS0}(k)$, le jeu de valeurs choisi lors de l'opération 1) remplace le précédent meilleur jeu de valeurs.

Les opérations 1) à 3) sont réitérées plusieurs fois jusqu'à obtenir un jeu de valeurs pour chacun des poids $w_{S,NbS0}(k)$ qui permet d'atteindre le niveau de performance souhaité.

Dans un autre mode de réalisation, à chaque fois qu'une procédure fTdI() est construite pour un parcours particulier correspondant à une signature modèle, cette procédure fTdI() est enregistrée dans le codage optimisé associé à ce modèle de signature. Ainsi, lorsque le compilateur 40 est de nouveau utilisé pour compiler un second programme d'ordinateur qui parcourt une structure de données en suivant le même parcours que celui mis en œuvre par un premier programme d'ordinateur compilé par le compilateur 40, cela conduit à sélectionner le même modèle de signature que celui précédemment sélectionné pour le premier programme d'ordinateur compilé. Dès lors, lors de cette seconde compilation, la fonction fTdI() n'a pas besoin d'être reconstruite puisqu'elle a déjà été construite et enregistrée dans la table de conversion lors de la première compilation. Ainsi, lors de cette seconde compilation, l'exécution des étapes 148, 150 et 152 peut être omise.

Le champ « statut » peut être enregistré ailleurs que dans la table d'indirection TdI. Dans un cas particulier, le champ « statut » peut même être simplifié. Par exemple, cela est possible dans le cas où chaque première instruction d'accès à une donnée de la structure de données provoque systématiquement le chargement de cette donnée dans la mémoire 34 et chaque instruction d'accès ultérieure à cette même donnée est systématiquement exécutée avec une adresse virtuelle correspondant à l'adresse de cette donnée dans la mémoire 34. Autrement dit, dans ce cas particulier, les données de la structure de données sont initialement chargées dans la mémoire 34 et restent en permanence dans cette mémoire 34, tant que la structure de données est utilisée. Dans une telle situation, le champ "statut" n'a pas besoin de comporter l'information qui permet de savoir si la donnée $D_{k,n}$ est déjà ou non enregistrée dans la mémoire 34. De même, dans le cas particulier où les données enregistrées dans la mémoire 34 sont seulement accédées en lecture, alors le champ "statut" n'a pas besoin de comporter une information indiquant que les données ont été modifiées dans la mémoire 34.

Variante de la procédure fLoad() de transfert :

De nombreux autres modes de réalisation de la procédure fLoad() sont possibles. Par exemple, d'autres méthodes sont possibles pour construire le bloc $B_{k,l}$ qui contient la donnée $D_{k,n}$ à transférer dans la mémoire 34. Par exemple, chaque subdivision k est divisée en une succession de plusieurs blocs $B_{k,l}$ consécutifs prédéterminés. Dans ce cas, l'indice "l" est le numéro d'ordre du bloc $B_{k,l}$ dans la subdivision k. Chaque bloc $B_{k,l}$ comporte $w_{S,NbS}(k)$ données. Les données de chaque bloc $B_{k,l}$ sont toutes situées à des adresses immédiatement consécutives dans la mémoire 6. Dans ce cas, le bloc de données $B_{k,l}$ à transférer dans la mémoire 34 n'est pas construit en fonction de la donnée $D_{k,n}$.

Il existe également d'autres méthodes pour sélectionner les blocs de données $B_{k,l}$ à remplacer dans la mémoire 34. Par exemple, les blocs $B_{k,l}$ à remplacer peuvent être sélectionnés selon le principe du premier entrée, premier sortie ("Firs In First Out" en anglais). Dans un tel mode de réalisation, par exemple, le champ "statut" de la table d'indirection comporte en plus pour chaque bloc $B_{k,l}$ enregistré dans la mémoire 34, une information représentative de l'ancienneté de la présence de ce bloc $B_{k,l}$ dans la mémoire 34. Par exemple, l'information représentative de l'ancienneté de la présence du bloc $B_{k,l}$ est un indice incrémenté de un à chaque fois qu'un bloc de la structure de données est transféré dans la mémoire 34. Ainsi, les bloc $B_{k,l}$ les plus anciens dans la mémoire 34 sont associés à des valeurs de cet indice plus faibles que celles associées aux blocs transférés dans la mémoire 34 plus récemment.

Variantes des procédures fGet() et fSet() :

En variante, les procédures fGet() et fSet() peuvent varier en fonction de la subdivision k dans laquelle est contenue la donnée à accéder. Cela peut par exemple être exploité pour optimiser encore plus le transfert des données entre les mémoires 36 et 34, en tenant compte pour cela du numéro d'ordre k de la subdivision et donc du poids $w_{S,NbS}(k)$ associé à cette subdivision.

Autres variantes :

En variante, un codage optimisé est utilisé pour une partie seulement des structures de données déclarées dans le code source. Par exemple, pour cela, seule une ou plusieurs des structures de données du code source sont accédées en utilisant les instructions spécifiques du langage V0. Dans ce code source, les accès aux autres structures de données déclarées sont codés en utilisant directement les instructions correspondantes du langage C++ au lieu d'utiliser les instructions spécifiques du langage V0.

Ce qui a été décrit dans le cas particulier où la structure de données est une matrice à deux dimensions s'applique, après adaptation, à tout type de structure de données. Dans le cas où la structure de données n'est pas une matrice à deux dimensions, les instructions spécifiques « MATRIX_DEFINE », « MATRIX_ALLOCATE », « MATRIX_GET », « MATRIX_SET », « MATRIX_FREE » du langage V0 sont remplacées, respectivement, par des instructions spécifiques « D_DEFINE », « D_ALLOCATE », « D_GET », « D_SET », « D_FREE ». Ces instructions spécifiques commençant par « D_ » remplissent chacune la même fonction que celle décrite dans le cas particulier où la structure de données est une matrice à deux dimensions. Toutefois, le jeu d'instructions correspondant en langage C++ doit être adapté. Par exemple, si la structure de données est une matrice à une dimension, le jeu d'instructions correspondant en langage C++ à l'instruction spécifique « D_DEFINE n» et « int *n ». De même, si la structure de données est une matrice à trois dimensions, le jeu d'instructions correspondant en langage C++ à l'instruction spécifique « D_DEFINE » et l'instruction « int***n ».

Le jeu d'instructions d'instrumentation doit aussi être adapté. Par exemple, dans le cas où la structure de données est une matrice à une ou à plus de trois dimensions, le nombre d'indices à relever lors de chaque accès à une donnée de cette structure de données n'est pas le même.

D'autres modes de réalisation du langage V0 sont possibles. Par exemple, au lieu d'utiliser le langage de programmation C++ pour les autres instructions que les instructions spécifiques, d'autres langages de programmation peuvent être utilisés comme le langage C, Ada, Caml ou PASCAL pour ces autres instructions.

Dans un cas particulier, le programme d'ordinateur compilé peut être le code source d'un système d'exploitation. Un système d'exploitation ainsi compilé peut alors utiliser la mémoire secondaire.

La procédure d'affectation des poids $w_{S,NbS0}(k)$ décrite précédemment peut être mise en œuvre sans utiliser la fonction Ps(x) pour calculer les poids ws,Nbs(k) pour la même structure de données. Par exemple, dans un mode de réalisation alternatif, la fonction $P_S(x)$ n'est pas utilisée. Pour cela, par exemple, la procédure fTdI() est identique à la procédure d'affectation de poids utilisée pour calculer les poids ws,Nbso(k) pour le nombre NbS0 de subdivisions. Dès lors, pour la taille Diml de la structure de données qui correspond à NbSl subdivisions, les opérations suivantes sont exécutées :

- le code exécutable 76 non optimisé est exécuté et lors de l'exécution de ce code 76, la taille Diml de la structure de données est choisie, puis
- le motif d'accès à la structure de données de taille Diml est relevé, puis
- les poids $w_{S,NbS1}(k)$ sont calculés en exécutant l'étape 148 pour le nombre NbSl de subdivisions et à l'aide du motif d'accès relevé pour cette taille Diml.

Les opérations ci-dessus peuvent notamment être mises en œuvre pour calculer les poids $w_{S,NbS1}(k)$ d'une structure de données dont la taille est connue au moment de la compilation du programme d'ordinateur. Autrement dit, la taille Diml n'est pas acquise lors de l'exécution du programme d'ordinateur.

La procédure d'affectation des poids $w_{S,NbS0}(k)$ décrite précédemment peut aussi être mise en œuvre sans utiliser la procédure fTdI(). Par exemple, lorsque la taille de la structure de données est constante et égale à DimO, alors les opérations 150, 152 sont omises et, lors de l'opération 154, aucune procédure de calcul de poids n'est introduite dans le code source optimisé. Seule la table d'indirection TdI0, construite lors de l'opération 148, est introduite dans le code source optimisé. Dans ce cas, la structure de la table TdI0 est, par exemple, similaire à celle décrite pour la table TdI.

Chapitre III : Avantages des modes de réalisation décrits

Le fait de calculer les poids $w_{S,NbS}(k)$ à l'aide de la fonction Ps(x) permet d'obtenir des valeurs pour ces poids qui permettent de maintenir constantes ou approximativement constantes les performances du calculateur 4 lorsque la dimension choisie pour la structure de données est différente de la dimension DimO utilisée pour construire les poids $w_{S,NbS0}(k)$. Ainsi, l'utilisation de la fonction Ps(x) permet de conserver les performances du calculateur 4 sensiblement constantes, et cela même si la dimension de la structure de données varie.

De plus, le fait de calculer les poids ws,Nbs(k) à partir des poids ws,Nbso(k) permet de déterminer rapidement les valeurs de ces poids pour une dimension quelconque de la structure de données. Cela se révèle plus rapide que de réitérer les différentes opérations mises en œuvre pour calculer les poids $w_{S,NbS0}(k)$, mais dans le cas où la taille de la structure de données est différente.

Le fait que la fonction $P_S(x)$ satisfasse les conditions (1) à (4) permet d'obtenir des valeurs pour les poids $w_{S,NbS}(k)$ qui permettent de répliquer, pratiquement sans aucune variation de performances, les performances obtenues pour la taille DimO de la structure de données à toute autre dimension de cette structure de données.

Le fait que les poids $w_{S,NbS0}(k)$ soit calculé à l'aide de la relation $w_{S,NbS0}(k) = F(C(D_{k,1}),..., C(D_{k,Dimk}))$, permet accélérer l'exécution du programme d'ordinateur lorsque la mémoire secondaire est une mémoire plus rapide que la mémoire principale ou que la mémoire cache.

Le fait de sélectionner, lors de l'opération 146, la procédure fCut() en fonction du motif d'accès relevé permet de choisir systématiquement un agencement pour la structure de données dans la mémoire principale qui améliore la localité des données. L'amélioration de la localité des données réduit le nombre de transfert de données entre les mémoires 6 et 34. Cela améliore la vitesse d'exécution du programme d'ordinateur.

Le fait de choisir les poids $w_{S,NbS0}(k)$ comme étant égaux chacun à un multiple entier du paramètre So permet d'accélérer le transfert des données entre les mémoires 6 et 34.

L'utilisation de la procédure de regroupement AMSC permet de réserver l'usage de la mémoire 34 aux données de la structure de données pour lesquelles il est très probable que ce soit bénéfique. Ainsi, cela permet aussi de limiter le nombre de transferts de données entre les mémoires 6 et 34 et donc d'accélérer l'exécution du programme d'ordinateur par le calculateur 4.

Le fait de choisir systématiquement pour chaque structure de données un agencement qui limite le nombre de défauts de cache, permet en plus de maximiser la probabilité que les différentes données contenues dans une même subdivision soient accédées les unes après les autres. Dès lors, cela augmente aussi la probabilité que les données pré-chargées dans la mémoire 34 soient par la suite accédées par le programme d'ordinateur. Cela permet donc aussi de limiter le nombre de transferts de données entre les mémoires 6 et 34 et donc d'accélérer l'exécution du programme d'ordinateur.

L'utilisation en tant que signature caractéristique des accès à la mémoire, d'une signature caractéristique des accès propre à une seule structure de données, permet d'obtenir une signature caractéristique plus reproductible. En particulier, la signature caractéristique ainsi construite est plus reproductible qu'une signature caractéristique construite en prenant en compte tous les accès à la mémoire et sans distinguer les accès à une structure de données des autres accès à la mémoire.

De plus, le fait que la signature soit construite à partir d'identifiants de position relative et non pas directement à partir des adresses virtuelles ou physique, permettent d'obtenir une signature qui dépend seulement de la façon dont les données de la structure de données sont parcourues lors de l'exécution du programme d'ordinateur. Ainsi, la signature construite est pratiquement indépendante des autres caractéristiques du programme d'ordinateur exécuté. Par exemple, les signatures construites, obtenues en exécutant deux programmes d'ordinateur différents, mais qui accèdent à la structure de données selon le même parcours particulier, sont identiques.

L'utilisation d'identifiants de position relative rend également la signature construite insensible à la modification de la plage d'adresses virtuelles ou physique allouée à cette structure de données. En effet, il est fréquent que lors d'une exécution suivante du même programme d'ordinateur, le système d'exportation alloue une plage d'adresses virtuelles ou physiques différente à la même structure de données.

Grace au fait que la distribution statistique soit normalisée, il importe peu qu'un programme d'ordinateur réitère de nombreuses fois les mêmes traitements de la structure de données alors qu'un autre programmes ordinateurs n'exécute qu'une seule fois ces traitements. Si ces deux programmes parcourent de la même façon la structure de données, les signatures construites pour ces deux programmes seront identiques ou très similaires.

Le fait que l'identifiant de position relative soit égal à la distance entre deux identifiants de position relevés successivement permet d'obtenir un motif d'accès transformé représentatif de l'ordre dans lequel les différentes données de la structure de données sont accédées.

Le fait que la signature construite comporte une distribution statistique pour chaque indice permet d'obtenir une signature plus distinctive que si les adresses virtuelles étaient utilisées.

La construction de la signature caractéristique des accès à la mémoire en utilisant pour cela non pas des adresses physiques, mais les indices ou les adresses virtuelles dans l'espace d'adressage du programme d'ordinateur des données accédées permet d'obtenir une signature indépendante :

- du système d'exploitation exécuté par le calculateur qui exécute le programme d'ordinateur, et
- de l'agencement de la structure de données dans la mémoire du calculateur.

**ANNEXES**

**Annexe 1 : Exemple de code source en langage V0**

```
#define TYPE int


voidmatrixMult()
{
intN0;
intN1;
int N2;
cin » N0 >> N1;
cin » N2;
MATRIX_DEFINE(TYPE, a) ;
MATRIX_DEFINE(TYPE, b) ;
MATRIX_DEFINE(TYPE, r e s) ;

MATRIX_ALLOCATE(TYPE, N0, N1, a);



MATRIX_ALLOCATE(TYPE, N2 , N0, b) ;



MATRIX_ALLOCATE(TYPE, N2 , N1, r e s) ;



for (intj=0;j<N1;j++)
{
for (inti=0;i<N2;i++)
{
MATRIX_SET(res,i,j,0);
for (intk=0;k<N0;k++)
{
i n t tmp_a = MATRIX_GET(a,k,j);
i n t tmp_b = MATRIX_GET(b,i,k);
MATRIX_ADD(res,i,j,tmp_a*tmp_b);
}
}
```

```
} 

MATRIX_FREE(a,N0,N1,TYPE);


MATRIX_FREE(b , N2 , N0, TYPE) ;


MATRIX_FREE(r e s , N2 , N1, TYPE);
}
```

## Annexe 2 : Exemple de code source intermédiaire optimisé en langage C++

```

#defineTYPEint


voidmatrixMult()
{int N0;
int N1;
int N2;
cin » N0 » N1;
cin » N2;
i n t ** a;
int**b;
int**res;

a = (int**)ma11oc(N1*sizeof(int*));
for(inti=0;i<(int)N1;i++)
a [i]=(int*)malloc(N0*sizeof(int)) ;

bint**)malloc(N2*sizeof(int*));
for (inti=0;i<(int)N2;i++)
b[i]=(int*)malloc(N0*sizeof(int));

res=(int**)malloc(N1*sizeof(int*));
for(inti=0;i<(int)N1;i++)
res[i]=(int*)malloc(N2*sizeof(int));

for(intj=0;j<N1;j++)
{
for (inti=0;i<N2;i++)
{
res[j][i]=0;
for (intk=0;k<N0; k++)
{
inttmp_a=a[j][k] ;
int tmp_b=b[i][k];
res[j][i]+=tmp_a*tmp_b;
}
}
}

for (inti=0;i<(int)N0;i++)free(a[i]);
free (a) ;

for (inti=0;i<(int)N2;i++)free(b[i]);
free(b);
```

```
49
50 for (inti=0;(<(int)N2;i++)free(res[i]);
51 free(res);
52
53}
```

### Annexe 3 : Modèle de signature du parcours P1

```
1 # Occurence X
2 deltaX = [-dimX+1, 1]
3 occDeltaX = [dimY-1, dimY*(dimX-1)]
4
5 # Occurence Y
6deltaY= [0, 1]
7 occDeltaY = [dimY*(dimX-1), dimY-1]
```

### Annexe 4 : Modèle de signature du parcours P2

```
1 # Occurence X
2 deltaX= [0, 1]
3 occDeltaX = [dimX*(dimY-1), dimX-1]
4
5 # Occurence Y
6 occDeltaY = [-dimY+1, 1]
7 occDeltaY = [dimX-1, dimX*(dimY-1)]
Annexe 5 : Modèle de signature du parcours P3
1 d iag = math.sqrt(dimX**2 + dimY**2)
2 dim = min(dimX , dimY)
3 peack = dimX*dimY + 1 - (dimX + dimY)
4
5 # Occurence X
6 deltaX = [i for i in range(-dim+2, 2)]
7 occDeltaX = [2 for i in range(-dim+2, 0)]
8 occDeltaX.append(peack)
9
10 # Occurence Y
11 deltaY = [i for i in range (-dim+1, 2)]
12 occDeltaY = [2 for i in range(-dim+2, 0)]
13 occDeltaY.append (0)
14 occDeltaY.append (peack)
15
16 if (dimX < dimY) :
17 occDeltaX.insert(0, dimY-dimX)
18 occDeltaY.insert(0, dimY-dimX)
19 else :
20 occDeltaX.insert(0, dimX-dimY + 2)
21 occDeltaY.insert(0, dimX-dimY + 2)
```

### Annexe 6 : Modèle de signature du parcours P4

```
1 totalOcc = dimY * dimX-1
2
3 # Occurence X
4 de It aX = [-dimX+1]
5 occDeltaX = [nbBlock_Y_ceil - 1]
6 tota Occ -= occDeltaX [-1]
```

```
7
8 ocurence1 = (dimX -1) * nbBlock_Y_ceil
9 totalOcc -= ocurence1
10
11 deltaX. append (0)
12 occDeltaX. append (t o t a lOcc)
13
14 deltaX.append(1)
15 occDeltaX.append(ocurence1)
16
17 # Occurence Y
18 totalOcc = dimY * dimX - 1
19
20 deltaY = [1 - dimY_block]
21 occDeltaY = [(dimX - 1) * nbBlock_Y]
22 totalOcc -= occDeltaY[-1]
23
24 if (remainBlock_Y > 0):
25 deltaY.append (1 - remainBlock_Y)
26 occDeltaY.append (dimX - 1)
27 totalOcc = occDeltaY [-1]
28
29 deltaY.append(1)
30 occDeltaY.append(totalOcc)
```

**Annexe 7 : Codage optimisé générique associé au modèle de signature du parcours P1**

| Instructions spécifiques en langage V0 | Code générique en langage C++ |
|---|---|
| MATRIX_DEFINE(TYPE, NAME) | TYPE **NAME; |
| MATRIX_ALLOCATE(TYPE, NBL, NBC, NAME) | fCut(TYPE, NBL, NBC, NAME) <br> { <br> NAME =(TYPE **)malloc(NBC * sizeof(TYPE*)); <br> for (int i=0; i<(int)NBC; i++) <br> NAME[i]=(TYPE *)malloc(NBL*sizeof(TYPE)); <br> ... <br> } <br> fTdl(NbS); |
| MATRIX_GET(NAME, NDL, NDC) | fGet(NAME, NDL, NDC) <br> { <br> ... <br> fLoad(NAME, NDL, NDC); <br> } |
| MATRIX_SET(NAME, NDL, NDC, VALUE) | fSet(NAME, NDL, NDC, VALUE) <br> { <br> ... <br> fLoad(NAME, NDL, NDC); <br> } |
| MATRIX_ADD(NAME, NDL, NDC, VALUE) | VALUE = VALUE + fGet(NAME, NDL, NDC); <br> fSet(NAME, NDL, NDC, VALUE); |

(suite)

| Instructions spécifiques en langage V0 | Code générique en langage C++ |
|---|---|
| MATRIX_DEFINE(TYPE, NAME) | TYPE **NAME; |
| MATRIX_FREE(NAME, NBL, NBC, TYPE) | fFree(NAME, NBL, NBC)<br>{<br>for (int i=0; i<(int)NBL; i++) free(NAME[i]);<br>free(NAME);<br>...<br>} |

**Annexe 8 : Agencement optimisé associé au modèle de signature du parcours P2**

| Instructions spécifiques en langage V0 | Code générique en langage C++ |
|---|---|
| MATRIX_DEFINE(TYPE, NAME) | TYPE **NAME; |
| MATRIX_ALLOCATE(TYPE, NBL, NBC, NAME) | fCut(TYPE, NBL, NBC, NAME)<br>{<br>NAME =(TYPE **)malloc(NBL * sizeof(TYPE*));<br>for (int i=0; i<(int)NBL; i++)<br>NAME[i]=(TYPE *)malloc(NBC*sizeof(TYPE));<br>...<br>}<br>fTdl(NbS); |
| MATRIX_GET(NAME, NDL, NDC) | fGet(NAME, NDL, NDC)<br>{ |
| | ...<br>fLoad(NAME, NDL, NDC);<br>}; |
| MATRIX_SET(NAME, NDL, NDC, VALUE) | fSet(NAME, NDL, NDC, VALUE)<br>{<br>...<br>fLoad(NAME, NDL, NDC);<br>}; |
| MATRIX_ADD(NAME, NDL, NDC, VALUE) | VALUE = VALUE + fGet(NAME, NDL, NDC);<br>fSet(NAME, NDL, NDC, VALUE); |
| MATRIX_FREE(NAME, NBL, NBC, TYPE) | fFree(NAME, NBL, NBC)<br>{<br>for (int i=0; i<(int)NBL; i++) free(NAME[i]);<br>free(NAME);<br>...<br>} |

**Annexe 9 : Agencement optimisé associé au modèle de signature du parcours P3**

| Instructions spécifiques en langage V0 | Code générique en langage C++ |
|---|---|
| MATRIX_DEFINE(TYPE, NAME) | TYPE **NAME; |
| MATRIX_ALLOCATE(TYPE, NBL, NBC, NAME) | fCut(TYPE, NBL, NBC, NAME)<br>{<br>NAME =(TYPE **)malloc((NBL + NBC+1)* sizeof(TYPE*));<br>for (int i=0; i<(int)(NBL + NBC+1); i++)<br>{NAME[i]=(TYPE *)malloc((NBL + NBC+1) * sizeof(TYPE))};<br>...<br>}<br>fTdI(NbS); |
| MATRIX_GET(NAME, NDL, NDC) | fGet(NAME, NDL, NDC)<br>{<br>...<br>fLoad(NAME, NDL, NDC);<br>}; |
| MATRIX_SET(NAME, NDL, NDC, VALUE) | fSet(NAME, NDL, NDC, VALUE)<br>{<br>...<br>fLoad(NAME, NDL, NDC);<br>}; |
| MATRIX_ADD(NAME, NDL, NDC, VALUE) | VALUE = VALUE + fGet(NAME, NDL, NDC);<br>fSet(NAME, NDL, NDC, VALUE); |
| MATRIX_FREE(NAME, NBL, NBC, TYPE) | fFree(NAME, NBL, NBC)<br>{<br>for (int i=0; i<(int)NBL; i++) free(NAME[i]);<br>free(NAME);<br>...<br>} |

**Revendications**

1. Procédé d'exécution d'un programme d'ordinateur par un calculateur électronique comportant une mémoire principale et une mémoire secondaire physiquement distincte de la mémoire principale, cette mémoire secondaire correspondant, dans l'espace d'adressage du programme d'ordinateur, à une plage d'adresses distincte de la plage d'adresses correspondant à la mémoire principale, **caractérisé en ce que** ce procédé comporte :

   a) la fourniture (162) du code exécutable du programme d'ordinateur, ce code exécutable contenant :

   - une déclaration d'une structure de données dont la taille est acquise uniquement au cours de l'exécution du programme d'ordinateur,
   - des instructions d'accès aux données de la structure de données,
   - une procédure prédéterminée de découpage de cette structure de données en un nombre de subdivisions qui dépend de la taille de la structure de données, chaque subdivision comportant plusieurs données correspondant chacune à une adresse respective de l'espace d'adressage du programme d'ordinateur et les adresses des données d'une même subdivision étant toutes consécutives, cette procédure étant apte à ordonner les unes par rapport aux autres les subdivisions dans la mémoire principale et à diviser la zone de la mémoire principale contenant la structure de données en NbS0 subdivisions lorsque la taille de la structure de données est égale à DimO,
   - une procédure prédéterminée de calcul de poids apte, lorsqu'elle est exécutée par le calculateur, à calculer un poids pour un nombre donné de subdivisions, cette procédure utilisant pour cela une fonction numérique

$P_S(x)$ continue sur l'intervalle [1; NbS0] et passant par NbS0 points de coordonnées ($k_0$, $w_{S,NbS0}(k_0)$), cette fonction numérique $P_S(x)$ étant définie sur chaque intervalle [$k_0$, $k_0+1$] par un polynôme d'ordre inférieure ou égale à trois, où :

- $k_0$ est un numéro d'ordre entier compris dans l'intervalle [1; NbS0] et identifiant une subdivision respective parmi l'ensemble des NbS0 subdivisions générées par la procédure prédéterminée de découpage lorsque la taille de la structure de données est égale à DimO, et
- $w_{S,NbS0}(k_0)$ est un poids égal au nombre de données transférées entre la mémoire principale et la mémoire secondaire en réponse à l'exécution, par le calculateur, d'une instruction d'accès à une seule donnée de la subdivision correspondant à cet identifiant $k_0$, la valeur du poids $w_{S,NbS0}(k_0)$ étant une constante calculée lors de la compilation du programme d'ordinateur pour atteindre un niveau de performance donné lorsque la dimension de la structure de données est égale à DimO,

- une procédure de transfert de données entre la mémoire principale et la mémoire secondaire,

b) l'exécution (164) du code exécutable du programme d'ordinateur par le calculateur, lors de cette exécution :

- le calculateur acquière (170) une taille Dim1 pour la structure de données différente de la taille DimO, puis
- le calculateur exécute (172) la procédure prédéterminée de découpage paramétrée avec la taille Dim1 acquise et divise la zone de la mémoire principale dans laquelle est enregistrée la structure de données en NbS1 subdivisions, puis
- le calculateur exécute (174) la procédure prédéterminée de calcul de poids paramétrée par le nombre NbS1 de subdivisions, lors de l'exécution de la procédure prédéterminée de calcul de poids, le poids $w_{S,NbS1}(k)$ pour chacune des NbS1 subdivisions est obtenu à l'aide de la relation suivante : $w_{S,NbS1}(k) = P_S(1+(k-1) \times (NbS0-1)/(NbS1-1))$, où le numéro d'ordre k de la subdivision varie ici entre [1 ; NbS1], puis
- lorsqu'une donnée $D_{k,n}$ contenue dans une subdivision k de la mémoire principale doit être transférée de la mémoire principale vers la mémoire secondaire, le calculateur exécute la procédure de transfert ce qui provoque le transfert vers la mémoire secondaire, d'un bloc de $w_{S,NbS1}(k)$ données contiguës contenant la donnée $D_{k,n}$ à transférer, où $w_{S,NbS1}(k)$ est le poids calculé pour cette subdivision k.

2. Procédé selon la revendication 1, dans lequel :

- l'équation de la fonction numérique $P_S(x)$, entre chaque paire de points consécutifs de coordonnées [$k_0$ ; $w_{S,NbS0}(k_0)$] et [$k_0+1$ ; $w_{S,NbS0}(k_0+1)$], est un polynôme $P_{S,k0}(x)$ d'ordre trois défini seulement sur l'intervalle [$k_0$ ; $k_0+1$], et
- la fonction numérique $P_S(x)$ présente les propriétés suivantes :
- pour chaque point d'abscisse $k_0$ qui se trouve à la limite de deux intervalles [$k_0-1$ ; $k_0$] et [$k_0$ ; $k_0+1$] sur lesquels sont définis, respectivement, les polynômes $P_{S,k0-1}(x)$ et $P_{S,k0}(x)$, les dérivées premières et secondes des polynômes $P_{S,k0-1}(x)$ et $P_{S,k0}(x)$ sont égales au niveau du point d'abscisse $k_0$, et
- lorsque la fonction $P_S(x)$ comporte un extremum local, cette extremum est située au niveau d'un point d'abscisse $k_0$.

3. Procédé selon l'une quelconque des revendications précédentes dans lequel chaque poids $w_{S,NbS0}(k_0)$ vérifie la relation suivante : $w_{S,NbS0}(k_0) = F(C_{S,NbS0}(D_{k0,1}), ..., C(D_{k0,n-1}), C(D_{k0,n}), ..., C(D_{k0,Dimk}))$, où :

- F() est une fonction croissante prédéterminée, c'est-à-dire une fonction qui croit dès que l'un quelconque des coefficients $C(D_{k0,n})$ croit,
- Dimk est le nombre de données contenues dans la subdivision $k_0$,
- n est un numéro d'ordre identifiant la n-ième donnée $D_{k0,n}$ de la subdivision $k_0$,
- $C(D_{k0,n})$ est un coefficient défini par la relation suivante : $C(D_{k0,n}) = Av(D_{k0,n})/Occ(D_{k0,n})$, où :

- $Av(D_{k0,n})$ est le nombre moyen d'accès à d'autres données de la structure de données entre deux accès consécutifs à la donnée $D_{k0,n}$ lors de l'exécution du programme d'ordinateur pour la taille DimO de la structure de données, et
- $Occ(D_{k0,n})$ est le nombre de fois où la donnée $D_{k0,n}$ a été accédée lors de l'exécution du code exécutable pour la taille DimO de la structure de données.

4. Procédé de compilation d'un code source d'un programme d'ordinateur pour un calculateur comportant une mémoire principale et une mémoire secondaire physiquement distincte de la mémoire principale, cette mémoire secondaire correspondant, dans l'espace d'adressage du programme d'ordinateur, à une plage d'adresses distincte de la plage d'adresses correspondant à la mémoire principale, ce procédé comportant l'étape suivante :

a) l'acquisition (104) d'un code source initial du programme d'ordinateur, ce code source contenant :

- une déclaration d'une structure de données dont la taille est acquise uniquement au cours de l'exécution du programme d'ordinateur, et
- des instructions d'accès aux données de la structure de données,
**caractérisé en ce que** le procédé comporte également les étapes suivantes :

b) le compilateur sélectionne (146) une procédure prédéterminée de découpage de cette structure de données en un nombre de subdivisions qui dépend de la taille de la structure de données, chaque subdivision comportant plusieurs données correspondant chacune à une adresse respective de l'espace d'adressage du programme d'ordinateur et les adresses des données d'une même subdivision étant toutes consécutives, cette procédure étant apte à ordonner les unes par rapport aux autres les subdivisions dans la mémoire principale et à diviser la zone de la mémoire principale contenant la structure de données en NbS0 subdivisions lorsque la taille de la structure de données est égale à DimO,

c) à chacune des subdivisions de la structure de données de taille DimO, le compilateur associe (148) un poids $w_{S,NbS0}(k_0)$ en exécutant une procédure prédéterminée d'affectation de poids, où $k_0$ est un numéro d'ordre entier compris dans l'intervalle [1; NbS0] et identifiant une subdivision respective parmi l'ensemble des NbS0 subdivisions générées par la procédure prédéterminée de découpage lorsque la taille de la structure de données est égale à DimO, puis

d) le compilateur construit (150) une fonction numérique $P_S(x)$ continue sur l'intervalle [1; NbS0] et qui passe par chacun des points de coordonnées $(k_0, w_{S,NbS0}(k_0))$, cette fonction numérique $P_S(x)$ étant définie sur chaque intervalle $[k_0, k_0+1]$ par un polynôme d'ordre inférieure ou égale à trois, puis

e) le compilateur construit (152) une procédure de calcul de poids apte, lorsqu'elle est exécutée par le calculateur, à calculer un poids $w_{S,NbS1}(k)$ pour un nombre donné NbS1 de subdivisions à l'aide de la relation suivante : $w_{S,NbS1}(k) = P_S(1+(k-1)(NbS0-1)/(NbS1-1))$, où k est le numéro d'ordre de la subdivision et varie ici entre [1 ; NbS1], NbS1 est un nombre de subdivisions différent du nombre NbS0 et la fonction $P_S()$ est la fonction construite lors de l'étape d),

f) le compilateur modifie (154) le code source initial en y intégrant :

- la procédure sélectionnée de découpage de la structure de données,
- la procédure construite de calcul de poids,
- une procédure de transfert de données entre la mémoire principale et la mémoire secondaire exécutée, par le calculateur, à chaque fois qu'une donnée $D_{k,n}$ contenue dans une subdivision k de la mémoire principale doit être transférée vers la mémoire secondaire, cette procédure de transfert étant apte, lorsqu'elle est exécutée par le calculateur, à provoquer le transfert vers la mémoire secondaire, d'un bloc de $w_{S,NbS1}(k)$ données contiguës contenant la donnée $D_{k,n}$ à transférer, où $w_{S,NbS1}(k)$ est le poids calculé pour cette subdivision k à l'aide de la procédure construite de calcul de poids, puis

g) le compilateur compile (160) le code source modifié pour obtenir un code exécutable qui, lorsqu'il est exécuté par le calculateur, met en œuvre le procédé de la revendication 1.

5. Procédé selon la revendication 4, dans lequel :

- le compilateur compile (106) une première fois le code source initial pour obtenir un premier code exécutable, puis
- le compilateur exécute (112) le premier code exécutable et, lors de cette exécution du premier code exécutable :

- le compilateur acquière (114) une taille DimO pour la structure de données, et
- lors de chaque accès à une donnée de la structure de données, le compilateur relève (118) l'identifiant de la structure de données et un identifiant de la position de la donnée accédée à l'intérieur de cette structure de données, la suite ordonnée temporellement des seuls identifiants de position relevés avec l'identifiant de cette structure de données formant un motif d'accès relevé à cette structure de données.

6. Procédé selon la revendication 5, dans lequel, lors de l'étape b), le compilateur sélectionne (146) la procédure prédéterminée de découpage en fonction du motif d'accès relevé.

7. Procédé selon la revendication 6 pour un calculateur qui comporte en plus une mémoire cache, dans lequel :

- lors de l'étape a), la déclaration de la structure de donnée correspond à une structure de données apte à être enregistrée dans la mémoire principale du calculateur cible selon un agencement standard et, en alternance, selon un agencement optimisé, l'agencement optimisé correspondant à un agencement des données de la structure de données dans la mémoire principale qui, lorsque le calculateur cible parcourt les données de cette structure de données dans un ordre particulier, provoque moins de défauts de cache que lorsque, toute chose égale par ailleurs, c'est l'agencement standard qui est mis en œuvre, et
- le procédé comporte la fourniture d'une base de données à partir de laquelle une signature modèle des accès à cette structure de données peut être extraite, cette signature modèle étant identique à celle obtenue lorsque le calculateur exécute un programme d'ordinateur qui parcourt les données de cette structure de données dans ledit ordre particulier, chaque signature modèle étant associée par cette base de données à une procédure prédéterminée respective de découpage de cette structure de données, puis
- le compilateur construit (120) une signature caractéristique des accès à la structure de données en utilisant pour cela uniquement le motif d'accès à cette structure de données relevé, puis
- le compilateur compare (144) la signature construite à la signature modèle extraite de la base de données, puis
- lorsque la signature modèle correspond à la signature construite, le compilateur sélectionne (146) la procédure prédéterminée de découpage associée, par la base de données, à cette signature modèle, et, dans le cas contraire, sélectionne une autre procédure prédéterminée de découpage de la structure de données.

8. Procédé selon l'une quelconque des revendications 5 à 7, dans lequel :

- le compilateur calcule (148.1) à partir du motif d'accès relevé et pour chaque donnée $D_{k0,n}$ de la structure de données de taille DimO, un coefficient $C(D_{k0,n})$ qui croit en fonction d'une grandeur $Av(D_{k0,n})$ et qui décroît en fonction d'une grandeur $Occ(D_{k0,n})$, où :

  - l'indice k0 est le numéro d'ordre de la subdivision $k_0$,
  - l'indice n est un numéro d'ordre identifiant la n-ième donnée $D_{k0,n}$ de la subdivision $k_0$,
  - $Av(D_{k0,n})$ est le nombre moyen d'accès à d'autres données de la structure de données entre deux accès consécutifs à la donnée $D_{k0,n}$ lors de l'exécution du premier code exécutable pour la taille DimO de la structure de données,
  - $Occ(D_{k0,n})$ est le nombre de fois où la donnée $D_{k0,n}$ a été accédée lors de l'exécution du premier code exécutable pour la taille DimO de la structure de données, puis

- le compilateur calcule (148.2, 148.3), pour chaque subdivision $k_0$ de la structure de donnée de taille DimO, un poids $w_{S,NbS0}(k_0)$ à l'aide de la relation suivante : $w_{S,NbS0}(k_0) = F(C_{S,NbS0}(D_{k0,1}), ..., C(D_{k0,n-1}), C(D_{k0,n}), ..., C(D_{k0,Dimk}))$, où :

  - F() est une fonction croissante, c'est-à-dire une fonction qui croit dès que l'un quelconque des coefficients $C(D_{k0,n})$ croit, et
  - Dimk est le nombre de données $D_{k0,n}$ contenues dans la subdivision $k_0$.

9. Procédé selon la revendication 8, dans lequel, lors de l'étape c) :

  - le compilateur exécute (148.2) une procédure de regroupement, dans plusieurs classes, des données $D_{k0,n}$ de la structure de données de taille DimO, en fonction des coefficients $C(D_{k0,n})$,
  - le compilateur affecte (148.2) à chaque donnée $D_{k0,n}$ regroupée dans une même classe, un même poids intermédiaire $wi_{S,NbS0}(D_{k0,n})$, la valeur de ce poids intermédiaire $wi_{S,NbS0}(D_{k0,n})$ étant d'autant plus grande que la valeur médiane des coefficients $C(D_{k0,n})$ associée aux données $D_{k0,n}$ regroupées dans cette classe est grande, puis
  - le compilateur affecte (148.3) un poids $w_{S,NbS0}(k_0)$ à chaque subdivision $k_0$ de la structure de taille DimO dont la valeur est d'autant plus grande que la moyenne arithmétique des poids intermédiaires $wi_{S,NbS0}(D_{k0,n})$ associés à chacune des données $D_{k0,n}$ contenues dans cette subdivision $k_0$, est grande.

10. Procédé selon la revendication 9, dans lequel lors de l'exécution de la procédure de regroupement, le compilateur détermine lui-même le nombre de classes et l'étendue de chaque classe à partir des coefficients $C(D_{k0,n})$ associés à chacune des données $D_{k0,n}$ de la structure de données de taille DimO.

**11.** Procédé selon la revendication 10, dans lequel la procédure de regroupement exécutée est la procédure AMSC (« *Agglomerative Mean-Shift Clustering* »).

**12.** Procédé selon l'une quelconque des revendications 4 à 11, dans lequel, lors de l'étape c), le compilateur affecte (148) à chaque poids $w_{S,NbS0}(k_0)$ une valeur contenue dans un groupe $G_w$ constitué uniquement de multiples entiers d'un paramètre So, où le paramètre So est égal au nombre maximal de données qui peuvent être transférées simultanément sur le bus de données qui relie la mémoire principale à la mémoire secondaire.

**13.** Procédé selon la revendication 12, dans lequel les valeurs contenues dans le groupe $G_w$ forment une suite arithmétique de raison So.

**14.** Support d'enregistrement d'informations, lisible par un microprocesseur, **caractérisé en ce que** ce support comporte des instructions pour l'exécution d'un procédé conforme à l'une quelconque des revendications précédentes, lorsque ces instructions sont exécutées par le microprocesseur.

**15.** Compilateur électronique (40) d'un code source d'un programme d'ordinateur pour un calculateur comportant une mémoire principale et une mémoire secondaire physiquement distincte de la mémoire principale, cette mémoire secondaire correspondant, dans l'espace d'adressage du programme d'ordinateur, à une plage d'adresses distincte de la plage d'adresses correspondant à la mémoire principale, ce compilateur étant configuré pour exécuter l'étape suivante :

a) l'acquisition d'un code source initial du programme d'ordinateur, ce code source contenant :

- une déclaration d'une structure de données dont la taille est acquise uniquement au cours de l'exécution du programme d'ordinateur, et
- des instructions d'accès aux données de la structure de données,
**caractérisé en ce que** le compilateur est également configuré pour réaliser les étapes suivantes :

b) le compilateur sélectionne une procédure prédéterminée de découpage de cette structure de données en un nombre de subdivisions qui dépend de la taille de la structure de données, chaque subdivision comportant plusieurs données correspondant chacune à une adresse respective de l'espace d'adressage du programme d'ordinateur et les adresses des données d'une même subdivision étant toutes consécutives, cette procédure étant apte à ordonner les unes par rapport aux autres les subdivisions dans la mémoire principale et à diviser la zone de la mémoire principale contenant la structure de données en NbS0 subdivisions lorsque la taille de la structure de données est égale à DimO,

c) à chacune des subdivisions de la structure de données de taille DimO, le compilateur associe un poids $w_{S,NbS0}(k_0)$ en exécutant une procédure prédéterminée d'affectation de poids, où $k_0$ est un numéro d'ordre entier compris dans l'intervalle [1 ; NbS0] et identifiant une subdivision respective parmi l'ensemble des NbS0 subdivisions générées par la procédure prédéterminée de découpage lorsque la taille de la structure de données est égale à DimO, puis

d) le compilateur construit une fonction numérique $P_S(x)$ continue sur l'intervalle [1 ; NbS0] et qui passe par chacun des points de coordonnées $(k_0, w_{S,NbS0}(k_0))$, cette fonction numérique Ps(x) étant définie sur chaque intervalle $[k_0, k_0+1]$ par un polynôme d'ordre inférieure ou égale à trois, puis

e) le compilateur construit une procédure de calcul de poids apte, lorsqu'elle est exécutée par le calculateur, à calculer un poids $w_{S,NbS1}(k)$ pour un nombre donné NbS1 de subdivisions à l'aide de la relation suivante : $w_{S,NbS1}(k) = P_S(1+(k-1)(NbS0-1)/(NbS1-1))$, où k est le numéro d'ordre de la subdivision et varie ici entre [1 ; NbS1], NbS1 est un nombre de subdivisions différent du nombre NbS0 et la fonction $P_S()$ est la fonction calculée lors de l'étape d),

f) le compilateur modifie le code source initial en y intégrant :

- la procédure sélectionnée de découpage de la structure de données,
- la procédure construite de calcul de poids,
- une procédure de transfert de données entre la mémoire principale et la mémoire secondaire exécutée, par le calculateur, à chaque fois qu'une donnée $D_{k,n}$ contenue dans une subdivision k de la mémoire principale doit être transférée vers la mémoire secondaire, cette procédure de transfert étant apte, lorsqu'elle est exécutée par le calculateur, à provoquer le transfert vers la mémoire secondaire, d'un bloc de $w_{S,NbS1}(k)$

données contiguës contenant la donnée $D_{k,n}$ à transférer, où $w_{S,NbS1}(k)$ est le poids calculé pour cette subdivision k à l'aide de la procédure construite de calcul de poids, puis

g) le compilateur compile (160) le code source modifié pour obtenir un code exécutable qui, lorsqu'il est exécuté par le calculateur, met en œuvre le procédé de la revendication 1.

Fig. 1

Fig. 2

| | | | | |
|---|---|---|---|---|
| 1 | 3 | **5** | **7** | 9 |
| 2 | 4 | **6** | **8** | 10 |
| 11 | 13 | **15** | **17** | 19 |
| 12 | 14 | **16** | **18** | 20 |
| **21** | **22** | 23 | 24 | 25 |

Fig. 3

| | | |
|---|---|---|
| **1** | **2** | **3** |
| **4** | **5** | **6** |
| **7** | **8** | **9** |
| **10** | **11** | **12** |
| **13** | **14** | **15** |

Fig. 4

Fig. 5

Fig. 6

Fig. 7

Fig. 8

Fig. 9

EP 3 995 949 A1

Fig. 10

Fig. 11

Fig. 12

45

Fig. 13

Fig. 14

Europäisches
Patentamt

European
Patent Office

Office européen
des brevets

## RAPPORT DE RECHERCHE EUROPEENNE

Numéro de la demande

EP 21 20 4607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KANDEMIR M ET AL: "Dynamic management of scratch-pad memory space", PROCEEDINGS OF THE 38TH. ANNUAL DESIGN AUTOMATION CONFERENCE. (DAC). LAS VEGAS, NV, JUNE 18 - 22, 2001; [PROCEEDINGS OF THE DESIGN AUTOMATION CONFERENCE], NEW YORK, NY : ACM, US, 22 juin 2001 (2001-06-22), pages 690-695, XP058180247, DOI: 10.1145/378239.379049 ISBN: 978-1-58113-297-7 | 1-3,14 | INV. G06F8/41 G06F12/08 |
| A | * abrégé * * page 690, colonne de gauche, alinéa 3 – page 694, colonne de droite, alinéa 3; figure 3 * ----- | 4-13,15 | |
| X | DOOSAN CHO ET AL: "Adaptive Scratch Pad Memory Management for Dynamic Behavior of Multimedia Applications", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 28, no. 4, 1 avril 2009 (2009-04-01), pages 554-567, XP011253733, ISSN: 0278-0070 | 1-3,14 | |
| | | | DOMAINES TECHNIQUES RECHERCHES (IPC) G06F |
| A | * abrégé * * page 554, colonne de droite, alinéa 2 – page 555, colonne de gauche * * page 556, colonne de gauche, dernier alinéa – page 563, colonne de droite, alinéa 1; figure 1 * ----- -/-- | 4-13,15 | |

Le présent rapport a été établi pour toutes les revendications

| Lieu de la recherche | Date d'achèvement de la recherche | Examinateur |
|---|---|---|
| Munich | 8 mars 2022 | Lelait, Sylvain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

**EP 21 20 4607**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | RIYANE SID LAKHDAR ET AL.: "Data-layout optimization based on memory-access-pattern analysis for source-code performance improvement", PROCEEDINGS OF THE 23TH INTERNATIONAL WORKSHOP ON SOFTWARE AND COMPILERS FOR EMBEDDED SYSTEMS , 25 mai 2020 (2020-05-25), pages 1-6, XP055784692, New York, NY, USA DOI: 10.1145/3378678.3391874 ISBN: 978-1-4503-7131-5 Extrait de l'Internet: URL:https://dl.acm.org/doi/pdf/10.1145/3378678.3391874 [extrait le 2021-03-11] * abrégé * * page 1, colonne de droite, alinéa 4 – page 2, colonne de gauche, alinéa 3 * * page 2, colonne de droite, dernier alinéa – page 5, colonne de gauche, alinéa 2; figures 1-4 * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 8 mars 2022 | Lelait, Sylvain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1913348

**Littérature non-brevet citée dans la description**

- **KANDEMIR M et al.** Dynamic management of scratch-pad memory space. *Proceedings of the 38th, annual design automation conference,* 18 Juin 2001, 690-695
- **DOOSAN CHO et al.** Adaptive Scratch Pad Memory Management for Dynamic Behavior of Multimedia Applications. *IEEE Transactions on computer aided design of integrated circuit and systems,* 01 Avril 2009, vol. 28 (4), 554-567
- **RIYANE SID LAKHDAR et al.** Data-layout optimization based on memory-access-pattern analysis for source-code performance improvement. *Proceedings of the 23th International Workshop on Software and Compilers for Embedded Systems,* 25 Mai 2020, 1-6
- **XIAO-TONG YUAN ; BAO-GANG HU ; RAN HE.** Agglomerative mean-shift clustering. *IEEE Transactions on Knowledge and Data Engineering,* 2010, vol. 24 (2), 209-219
- Smart instruction codes for in-memory computing architectures compatible with standard sram interfaces. **MAHA KOOLI et al.** 2018 Design, Automation & Test in Europe Conférence & Exhibition (DATE). IEEE, 2018, 1634-1639
- **Z. XU et al.** Malware detection using machine learning based analysis of virtual memory access patterns. *DATE,* 2017